# EUROPEAN PATENT APPLICATION

(11) **EP 3 833 066 A1**
(43) Date of publication of application: **09.06.2021**
(21) Application number: 19844322.8
(22) Date of filing: 31.07.2019
(51) Int. Cl.: H04W 8/00

(54) **CAPABILITY CONTROL METHOD, TERMINAL AND NETWORK-SIDE NETWORK ELEMENT**

(30) Priority: 03.08.2018 CN 201810879846
(71) Applicant: VIVO MOBILE COMMUNICATION CO., LTD., Dongguan, Guangdong 523860 (CN)
(72) Inventor: KE, Xiaowan, Dongguan, Guangdong 523860 (CN); MA, Yue, Dongguan, Guangdong 523860 (CN)
(74) Representative: Winter, Brandl - Partnerschaft mbB
(86) International application number: PCT/CN2019/098554
(87) International publication number: WO 2020/024972

(57) **Abstract**

The present disclosure provides a capability control method, a terminal and a network-side network element. The capability control method includes: determining whether a predetermined condition has been met, the predetermined condition including at least one of a condition where a terminal capability changes, a condition where a terminal position changes, a condition where a card in the terminal is deleted, a condition where a card is newly added in the terminal, and a condition where the terminal does not support capability signaling optimization after the position has changed; and when the predetermined condition has been met, performing a first related operation of the terminal capability.

## Description

### CROSS-REFERENCE TO RELATED APPLICATION

The present application claims a priority of the Chinese patent application No. 201810879846.5 filed on August 3^{rd}, 2018, which is incorporated herein by reference in its entirety.

### TECHNICAL FIELD

The present disclosure relates to the field of communications technology, in particular to a capability control method, a terminal and a network-side network element.

### BACKGROUND

Along with the evolution of the network technology, more and more capabilities are required to be supported by a terminal, and more and more capabilities are required to be reported by the terminal to a network. Hence, an air-interface load caused by the reporting of the terminal capabilities becomes heavier and heavier, and the terminal capabilities may probably be changed.

However, currently there is no definite scheme about how to optimize the reporting when the terminal capability changes.

### SUMMARY

An object of the present disclosure is to provide a capability control method, a terminal, and a network-side network element, so as to solve the problem that there is no definite scheme about how to optimize the reporting when the terminal capability changes.

In a first aspect, the present disclosure provides in some embodiments a capability control method for a terminal, including: determining whether a predetermined condition has been met, the predetermined condition including at least one of a condition where a terminal capability changes, a condition where a terminal position changes, a condition where a card in the terminal is deleted, a condition where a card is newly added in the terminal, and a condition where the terminal does not support capability signaling optimization after the position has changed; and when the predetermined condition has been met, performing a first related operation of the terminal capability.

In a second aspect, the present disclosure provides in some embodiments a capability control method for a terminal, including: receiving request information for acquiring a capability variable; and transmitting capability variable information in accordance with the request information for acquiring the capability variable.

In a third aspect, the present disclosure provides in some embodiments a capability control method for a network-side network element, including: acquiring first information, the first information including at least one of terminal capability change information, terminal position change information, terminal capability information, indication information about terminal capability identifier information, and operation information about the terminal capability identifier information; and performing a second related operation of a terminal capability in accordance with the first information.

In a fourth aspect, the present disclosure provides in some embodiments a capability control method for a network-side network element, including: acquiring second information, the second information including at least one of indication information indicating that the terminal does not support capability signaling optimization, de-registration request information and registration request information; and performing a third related operation of a terminal capability in accordance with the second information.

In a fifth aspect, the present disclosure provides in some embodiments a communications device, including: a determination module configured to determine whether a predetermined condition has been met, the predetermined condition including at least one of a condition where a terminal capability changes, a condition where a terminal position changes, a condition where a card in a terminal is deleted, a condition where a card is newly added in the terminal, and a condition where the terminal does not support capability signaling optimization after the position has changed; and a first execution module configured to, when the predetermined condition has been met, perform a first related operation of the terminal capability.

In a sixth aspect, the present disclosure provides in some embodiments a communications device, including: a reception module configured to receive request information for acquiring a capability variable; and a transmission module configured to transmit capability variable information in accordance with the request information for acquiring the capability variable.

In a seventh aspect, the present disclosure provides in some embodiments a network-side network element, including: a first acquisition module configured to acquire first information, the first information including at least one of terminal capability change information, terminal position change information, terminal capability information, indication information about terminal capability identifier information, and operation information about the terminal capability identifier information; and a second execution module configured to perform a second related operation of a terminal capability in accordance with the first information.

In an eighth aspect, the present disclosure provides in some embodiments a network-side network element, including: a second acquisition module configured to acquire second information, the second information including at least one of indication information indicating that the terminal does not support capability signaling optimization, de-registration request information and registration request information; and a third execution module configured to perform a third related operation of a terminal capability in accordance with the second information.

In a ninth aspect, the present disclosure provides in some embodiments a communications device, including a memory, a processor, and a computer program stored in the memory and executed by the processor. The computer program is executed by the processor, so as to implement the steps of the capability control method for the terminal, or the steps of the capability control method for the network-side network element. In a possible embodiment of the present disclosure, the communications device is a terminal or a network-side network element.

In a tenth aspect, the present disclosure provides in some embodiments a computer-readable storage medium storing therein a computer program. The computer program is executed by a processor so as to implement the steps of the capability control method for the terminal, or the steps of the capability control method for the network-side network element.

It should be appreciated that, in the embodiments of the present disclosure, it is able to achieve such an effect of optimizing the reporting of the terminal capability when changing the terminal capability, thereby to save the capability reporting signaling, and enable a same terminal to meet different terminal capability requirements in different conditions.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
FIG. 1 is a flow chart of a capability control method according to one embodiment of the present disclosure;
FIG. 2 is another flow chart of the capability control method according to one embodiment of the present disclosure;
FIG. 3 is yet another flow chart of the capability control method according to one embodiment of the present disclosure;
FIG. 4 is still yet another flow chart of the capability control method according to one embodiment of the present disclosure;
FIG. 5 is a flow chart of the transmission of first information according to one embodiment of the present disclosure;
FIG. 6 is another flow chart of the transmission of the first information according to one embodiment of the present disclosure;
FIG. 7 is yet another flow chart of the transmission of the first information according to one embodiment of the present disclosure;
FIG. 8 is still yet another flow chart of the transmission of the first information according to one embodiment of the present disclosure;
FIG. 9 is a flow chart of the requesting of deleting capability identifier information according to one embodiment of the present disclosure;
FIG. 10 is a flow chart of the requesting of adding the capability identifier information according to one embodiment of the present disclosure;
FIG. 11 is a flow chart of a terminal position change procedure according to one embodiment of the present disclosure;
FIG. 12 is another flow chart of the terminal position change procedure according to one embodiment of the present disclosure;
FIG. 13 is a flow chart of a signaling optimization capability change procedure according to one embodiment of the present disclosure;
FIG. 14 is a structural schematic view showing a terminal according to one embodiment of the present disclosure;
FIG. 15 is another structural schematic view showing the terminal according to one embodiment of the present disclosure;
FIG. 16 is a structural schematic view showing a network-side network element according to one embodiment of the present disclosure;
FIG. 17 is another structural schematic view showing the network-side network element according to one embodiment of the present disclosure;
FIG. 18 is yet another structural schematic view showing the terminal according to one embodiment of the present disclosure; and
FIG. 19 is yet another structural schematic view showing the network-side network element according to one embodiment of the present disclosure.

### DETAILED DESCRIPTION

At first, it should be appreciated that, there are two types of terminal capabilities, i.e., radio capabilities and core network capabilities. For the radio capability, a terminal may report the radio capability of the terminal in accordance with a request from a network, and for the core network capability, the terminal may report a network capability of the terminal during the registration.

The terminal may support a plurality of bands and frequencies. Due to the introduction of such technologies as carrier aggregation (Carrier Aggregation, CA) and dual connectivity (Dual Connectivity, DC), various possible band combinations need to be provided, and the band combinations supported by different manufacturers may be different from each other, so there is a particularly large quantity of radio capabilities. In addition, along with the evolution of the network, more and more characteristics have been introduced into the network, and usually different radio capabilities and network capabilities need to be provided with respect to different characteristics. For a related network characteristic, the terminal needs to notify the network of information indicating whether the network characteristic is supported.

Generally speaking, each fresh-from-the-factory terminal is provided with device identification information, e.g., an international mobile equipment identity (International Mobile Equipment Identity, IMEI). The IMEI may include a type allocation code (Type Allocation Code, TAC), which usually consists of eight digits (six digits in the early days). The TAC is a code for differentiating terminal brands and types, and it is allocated by GSMA and its authorized agencies. First two digits of the TAC are also called as a reporting body identifier, and it is a code of a reporting body that authorizes the IMEI. For example, 01 represents CTIA in US, 35 represents BABT in British, and 86 represents TAF in China. Through the TAC, it is able to uniquely identify a same terminal type, and usually the terminal capabilities are the same for the same terminal type.

The IMEI may further include a software version number (Software Version Number, SVN) for differentiating different software versions used by the terminals of a same type when they are shipped. The SVN merely exists in a part of machine types for a part of brands, and different SVNs may correspond to different terminal capabilities.

In order to reduce the overhead caused by the reporting of the terminal capabilities, identification information indicating the terminal capabilities may be set for the terminal. As a method for optimizing terminal capability signaling, the terminal merely reports the identification information indicating the terminal capabilities to the network. The network may acquire the terminal capabilities through mapping in accordance with the identification information indicating the terminal capability. The identification information about the terminal capability may be capability identifier information indicating the terminal capability.

Due to a change in the practical need, the terminal capability may probably be changed, and update scenarios will be described as follows.

First scenario: when the terminal is shipped, many capability of the terminal may be in a disabled state, and when software is upgraded subsequently, some capabilities, e.g., a voice over long term evolution (Voice over Long Term Evolution, VoLTE) capability or some band capabilities, may be enabled. At this time, the terminal capabilities may be upgraded in batch. A size of the capabilities of such characteristics as VoLTE is controllable, but a change in the band capability may lead to a change in a CA or DC capability, and the size of the changed capability may be very large.

In the first scenario, currently the TVN of the terminal may not change after it has been shipped. When the software is upgraded subsequently, some capabilities may be enabled, and the SVN may be changed or not changed by the manufacturers. Hence, it is impossible for the network to directly know, from the SVN of the terminal, that whether the terminal capability has changed. In a scenario where the capability identifier information is allocated by the network, even if the network has known the change of the terminal capability, the network still needs to inquire and determine, in accordance with a complete radio capability of the terminal, whether the capability identifier information corresponding to the radio capability has already existed, and whether a new capability needs to be allocated. This leads to a huge burden for back-stage implementation.

Second scenario: for different terminals of a same type, one terminal is data-centric, and when it accesses a 4G network, a 5G network capability may be enabled. The other terminal is voice-centric, and when it is determined that voice is not supported by a 5G network, the 5G network capability may be disabled. After the 5G network capability has been disabled, the terminal needs to initiate position update to the network, so as to indicate a new network capability.

In the embodiments of the present disclosure, identification information about a terminal capability (i.e., terminal capability identifier information) may be used to identify the terminal capability. There is a mapping between the terminal capability identifier information and terminal capability information, and the terminal capability may be acquired through mapping in accordance with the terminal capability identifier information. The terminal capability identifier information may be mapped to a group of terminal capabilities or all the terminal capabilities. A size of the terminal capability identifier information is smaller than a size of the terminal capability, so it is able to achieve such an effect of optimizing the capability signaling.

In a possible embodiment of the present disclosure, one terminal may have one or more pieces of terminal capability identifier information.

In the embodiments of the present disclosure, a serving network is a network to which the terminal accesses, and it may be a network of an operator or a dedicated network, e.g., a public communications network or private communications network. In a possible embodiment of the present disclosure, an identifier of the serving network may be public land mobile network (Public Land Mobile Network, PLMN) or any others (e.g., an identifier configured by the private communications network itself).

In the embodiments of the present disclosure, a network type may include, but not limited to, at least one of a communications network type, a radio access technology type, a radio access network type and a network generation.

Optionally, the communications network type may include, but not limited to, at least one of Global System for Mobile communications (Global System for Mobile Communications, GSM), enhanced data rate for GSM evolution (Enhanced Data Rate for GSM Evolution, EDGE), general packet radio service (General Packet Radio Service, GPRS), GSM-circuit service (GSM-Circuit Service, GSM-CS), GSM-packet service (GSM-Packet Service, GSM-PS), CS, PS, code division multiple access (Code Division Multiple Access, CDMA), 3^{rd}-generation partnership project 2 (3^{rd}-Generation Partnership Project 2 (3GPP2) 1xCS, evolved packet system (Evolved Packet System, EPS) and 5^{th}-generation system (5^{th}-Generation System, 5GS).

Optionally, the radio access technology type may include, but not limited to, at least one of GSM edge radio access network (GSM Edge Radio Access Network, GERAN), GERAN-CS, GERAN-PS, EDGE, universal mobile telecommunications system (Universal Mobile Telecommunications System, UMTS) terrestrial radio access (UMTS Terrestrial Radio Access, UTRA), time division-synchronous code division multiple access (Time Division-Synchronous Code Division Multiple Access, TD-SCDMA), wideband code division multiple access (Wideband Code Division Multiple Access, WCDMA), high speed packet access (High Speed Packet Access, HSPA), code division multiple access (Code Division Multiple Access, CDMA), CDMA2000, 3GPP2 1xCS, cdma2000-1XRTT, evolved-UMTS terrestrial radio access (Evolved-UMTS Terrestrial Radio Access, EUTRA), long term evolution (Long Term Evolution, LTE) frequency division duplexing (Frequency Division Duplexing, FDD), LTE time division duplexing (Time Division Duplexing, TDD), 3GPP, N3GPP, 3GPP2, wireless local area network (Wireless Local Area Network, WLAN), narrow band Internet of things (Narrow Band Internet of Things, NB IOT), next-generation radio access network (Next-Generation Radio Access Network, NG RAN), EUTRA-new radio (EUTRA-New Radio, EUTRA-NR) and NR

Optionally, the radio access network type may include, but not limited to, GERAN, GERAN-CS, GERAN-PS, EDGE, UTRA, TD-SCDMA, WCDMA, HSPA, CDMA, CDMA2000, 3GPP2 1xCS, cdma2000-1XRTT, EUTRAN, LTE FDD, LTE TDD, 3GPP, N3GPP, 3GPP2, WLAN, NB IOT, NG RAN, EUTRA-NR and NR

Optionally, the network generation may include, but not limited to, at least one of 2G network, 3G network, 4G network, and 5G network.

In the embodiments of the present disclosure, the terminal capability may include at least one of terminal core network capability and terminal radio capability. The terminal core network capability may also be called as terminal network capability, or non-access stratum (Non-Access Stratum, NAS) capability.

Optionally, the terminal radio capability may include at least one of CA capability and DC capability.

Optionally, the terminal core network capability may include at least one of 5G session management capability, 5G mobility management capability, UE network capability, mobile station (Mobile Station, MS) network capability, etc.

Optionally, the terminal network core network capability may include at least one of 5G network capability, 4G network capability (e.g., UE network capability), 3G network capability (e.g., MS network capability), etc.

In the embodiments of the present disclosure, the terms "capability" and "terminal capability" may be the same, and thus may be interchangeable each other.

In the embodiments of the present disclosure, a terminal capability context may also be called as descriptive information about the terminal capability, which is used to describe a specific capability.

In one embodiment of the present disclosure, a capability variable may be used to represent a difference between a terminal capability after the change and a terminal capability before the change. In another embodiment of the present disclosure, the capability variable may be a changed capability.

In the embodiments of the present disclosure, the terms "capability identifier information", "terminal capability identifier information" and "identification information about the terminal capability" may be the same, and thus may be interchangeable each other.

In the embodiments of the present disclosure, the word "invalid" may be embodied as "unavailable" or "suspended". Invalid capability identifier information may be represented as at least one of suspended capability identifier information and unavailable capability identifier information.

In the embodiments of the present disclosure, the term "card" may be, but not limited to, at least one of universal integrated circuit card (Universal Integrated Circuit Card, UICC), subscriber identity module (Subscriber Identity Module, SIM), embedded-SIM (eSIM) and embedded-UICC (eUICC). The card may be a physical card. Further, an N^{th} card may be a card for the serving network which is placed into an N^{th} card slot. A primary card may be a card for the serving network which is placed into a primary card slot, and a secondary card may be a card for the serving network which is placed into a primary card slot. Card position information may also be called as card slot information.

The card may also be an electronic card, and a plurality of cards may be configured by the serving network for the terminal.

In the embodiments of the present disclosure, the addition of a new card in the terminal may be, but not limited to, at least one of inserting the card into a terminal device, and writing card information into the terminal device.

In the embodiments of the present disclosure, the deletion of a card from the terminal may be, but not limited to, at least one of removing the card from the terminal device, and deleting the card information from the terminal device.

In the embodiments of the present disclosure, application scope information about the terminal capability identifier information may be embedded as at least one of application condition information about the terminal capability identifier information and type information about the terminal capability identifier information.

In the embodiments of the present disclosure, the terminal capability signaling optimization may include radio capability signaling optimization and NAS capability signaling optimization. Optionally, the radio capability signaling optimization may also be called as optimizations on UE radio capability signaling, RACS for short. However, it should be appreciated that, any other name may probably be provided by the organization for standardization, and the present disclosure is not affected thereby.

Optionally, whether the capability signaling optimization is supported may also be called as whether a capability of optimizing the capability signaling is provided.

Optionally, supporting the capability signaling optimization may also be called as being able to optimize the capability signaling, having a capability of optimizing the capability signaling, or enabling the capability signaling optimization.

Optionally, not supporting the capability signaling optimization may also be called as being unable to optimize the capability signaling, not having a capability of optimizing the capability signaling, or disabling the capability signaling optimization.

Optionally, the term "acquire" may be understood as acquiring from a configuration, acquiring through reception, acquiring through reception after requesting, acquiring through self-learning, acquiring through deduction in accordance with non-received information, or acquiring through processing in accordance with received information, which will be determined according to the practical need and which will not be particularly defined herein. For example, when indication information indicating a certain capability fails to be received from a device, it may be deduced that the device does not support the capability.

In the embodiments of the present disclosure, a registration request may include at least one of an attachment request, a position update request, a mobile registration request, and an initial registration request.

In the embodiments of the present disclosure, a de-registration request may include a de-attachment request.

In the embodiments of the present disclosure, a newly-added capability may include at least one of an added capability, a re-enabled capability which was previously disabled, and a supported capability.

In the embodiments of the present disclosure, a disabled capability may include at least one of a capability that is not supported any more, and a capability that becomes invalid.

In the embodiments of the present disclosure, first capability identifier information may be capability identifier information mapped to a terminal capability before the change, and second capability identifier information may be capability identifier information mapped to the terminal capability after the change.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

In the embodiments of the present disclosure, a network element may be one of a physical device, a network function entity and a network unit.

In the embodiments of the present disclosure, a core network (Core Network, CN) network element may include, but not limited to, at least one of a core network device, a core network node, a core network function, a core network network element, a mobility management entity (Mobility Management Entity, MME), an access management function (Access Management Function, AMF), a session management function (Session Management Function, SMF), a user plane function (User Plane Function, UPF), a serving GW (Serving GW, SGW), a public data network (Public Data Network, PDN) gate way, a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and a radio access network device.

In the embodiments of the present disclosure, a radio access network (Radio Access Network, RAN) network element may include, but not limited to, at least one of a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved Node B (eNB), a 5G node B (gNB), a radio network controller (Radio Network Controller, RNC), a Node B, a non-3GPP inter working function (Non-3GPP Inter Working Function, N3IWF), an access controller (Access Controller, AC) node, an access point (Access Point, AP) device, or a WLAN node.

The base station may be a base transceiver station (Base Transceiver Station, BTS) in the GSM or CDMA, a Node B in the WCDMA, an evolutional Node B (eNB or e-NodeB) in the LTE, or a 5G base station (gNB), which will not be particularly defined herein.

In the embodiments of the present disclosure, a network-side network element may include at least one of the CN network element and the RAN network element.

In the embodiments of the present disclosure, the terminal may include a relay that supports a terminal function. The terminal may also be called as a terminal device or user equipment (User Equipment, UE), e.g., mobile phone, tablet personal computer, laptop computer, personal digital assistant (Personal Digital Assistant, PDA), mobile Internet device (Mobile Internet Device, MID), wearable device or vehicle-mounted device. It should be appreciated that, a specific type of the terminal will not be particularly defined herein.

In the embodiments of the present disclosure, it should be appreciated that, a capability signaling optimization capability of the terminal and the other terminal capabilities may be capability information elements (Information Elements, IEs) which are independently defined. The terminal may report the capability signaling optimization capability, and the network may determine, in accordance with the capability signaling optimization capability, whether to allocate the capability identifier information, or whether to acquire the capability identifier information from the terminal.

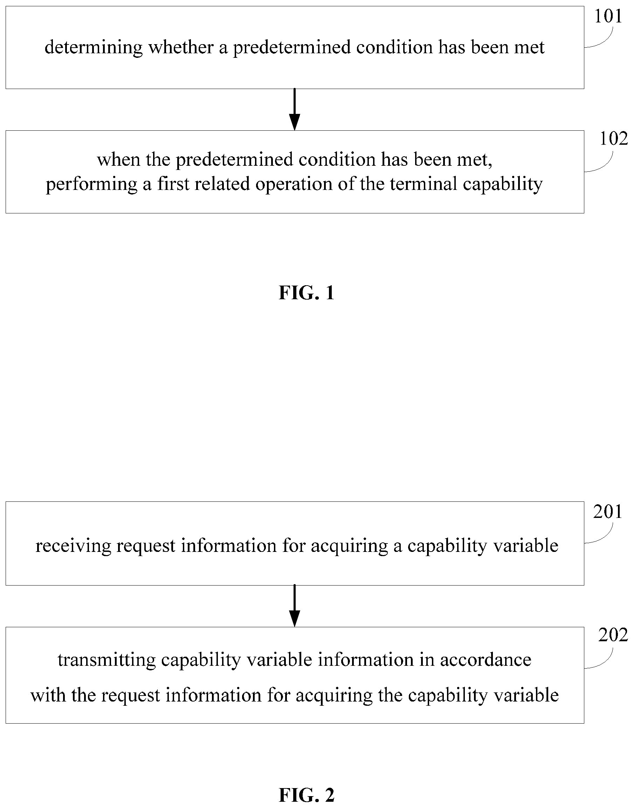

As shown in FIG. 1, the present disclosure provides in some embodiments a capability control method for a communications device. The communications device may include one of a terminal and a network side device. The capability control method may include the following steps.

Step 101: determining whether a predetermined condition has been met.

To be specific, the terminal may be at least one of a relay having a terminal function, a terminal device itself, a chip, a card (e.g., SIM card or UICC card), or a combination thereof. An application scenario of the terminal will not be particularly defined herein.

Optionally, the predetermined condition may include at least one of a condition where a terminal capability changes, a condition where a terminal position changes, a condition where a card in the terminal is deleted, a condition where a card is newly added in the terminal, and a condition where the terminal does not support capability signaling optimization after the position has changed.

Optionally, the terminal may be an entirety of the terminal device and the card. It should be appreciated that, when the terminal capability changes, a position of the card may not change.

Further, in the condition where the terminal position changes, the card in the terminal may be placed into another card slot, or the card may move from a first terminal device to a second terminal device. At this time, the terminal for performing the method in the embodiments of the present disclosure may be the card.

Optionally, a position of the card (e.g., a UICC or SIM card) may be changed from a first card slot to a second card slot. When the terminal is the card, the terminal position may change from the perspective of the card. In another possible embodiment of the present disclosure, the card may move from one terminal to another terminal. When the terminal is the card, the terminal position may change from the perspective of the card. At this time, a terminal capability corresponding to the card may change or not. It is not hard to understand that, after the terminal position has changed, the terminal may transmit a terminal capability identifier to a network again, or the terminal may indicate that terminal capability identifier information in the network has invalidated. The terminal may request the terminal capability identifier information from the terminal again. It is not hard to understand that, this is a secure and reliable practice.

Further, the deletion of the card from the terminal may include one of the removal of the card (e.g., a physical card) from the terminal, and the deletion of card information (e.g., an electronic card).

Further, the addition of the new card in the terminal may include one of the insertion of the new card into the terminal, and the addition of new card information.

Optionally, when the card in the terminal is deleted, the terminal may transmit a de-registration request to the network in the end, and the de-registration request may include first information. It is not hard to understand that, upon the receipt of the de-registration request, the network may delete the terminal capability identifier information in a terminal context. The network may acquire again the terminal capability identifier information when the terminal performs re-registration. It is not hard to understand that, this is a secure and reliable practice.

Optionally, when the new card is added in the terminal, the terminal may transmit a registration request to the network, and the registration request may include first information, e.g., information indicating that the terminal capability identifier information in the network becomes invalid. It is not hard to understand that, upon the receipt of the de-registration request, it is a secure and reliable practice to delete the existing terminal capability identifier information in the terminal context.

Step 102: when the predetermined condition has been met, performing a first related operation of the terminal capability.

In Step 102, the performing the first related operation of the terminal capability may include at least one of performing operation on the terminal capability identifier information and transmitting the first information.

Optionally, the terminal capability identifier information may be capability identifier information about the terminal capability before the change.

Optionally, the first information may include at least one of terminal capability change information, terminal position change information, terminal capability information, indication information about the terminal capability identifier information, and operation information about the terminal capability identifier information.

Further, the performing the operation on the terminal capability identifier information may include at least one of changing the terminal capability identifier information, deleting the terminal capability identifier information, and setting the terminal capability identifier information as invalid.

Further, the setting the terminal capability identifier information as invalid may include at least one of suspending the terminal capability identifier information, and setting the terminal capability identifier information as unavailable.

During the implementation, a plurality of types of terminal capabilities may be changed or there may exist a plurality of pieces of terminal capability identifier information. In one embodiment of the present disclosure, all or a part of the pieces of terminal capability identifier information may be changed. In another embodiment of the present disclosure, all or a part of the pieces of terminal capability identifier information may be deleted. In yet another embodiment of the present disclosure, all or a part of the pieces of terminal capability identifier information may be set as invalid.

Further, the changing the terminal capability identifier information may include changing first capability identifier information as second capability identifier information. The first capability identifier information may be capability identifier information mapped to the terminal capability before the change, and the second capability identifier information may be capability identifier information mapped to the terminal capability after the change.

It should be appreciated that, in a possible embodiment of the present disclosure, the first information may be transmitted to a first target end, and the first target end may be, but not limited to, at least one of an RAN network element, a CN network element, an AMF, an MME and a capability management function network element.

In a possible embodiment of the present disclosure, the terminal capability identifier information may include at least one of terminal type information, capability indication assistance information, capability identifier application scope information and a terminal capability identifier.

In a possible embodiment of the present disclosure, the terminal capability identifier information may include the terminal type information and the capability indication assistance information.

In another possible embodiment of the present disclosure, the terminal capability identifier information may include the terminal capability identifier.

In yet another possible embodiment of the present disclosure, the terminal capability identifier information may include the terminal capability identifier and the capability indication assistance information.

In still yet another possible embodiment of the present disclosure, the terminal capability identifier information may include the terminal capability identifier and the capability identifier application scope information.

Optionally, the terminal type information may include at least one of a terminal manufacturer identifier, a type allocation code (e.g., TAC) and a software version number (e.g., SVN).

Optionally, the capability indication assistance information may include at least one of card slot information corresponding to a capability, card information corresponding to a capability (e.g., card information about a physical card or an electronic card), serving network information corresponding to a capability, network type information corresponding to a capability, and capability type indication information.

Further, the card slot information corresponding to the capability may include at least one of identification information about a card slot, a card slot index, information about a first card slot, information about a second card slot, indication information about a primary card slot or a secondary card slot, indication information indicating whether the capability is applied to all the card slots, and indication information indicating whether the capability is independent of the card slots. It should be appreciated that, during the implementation, the first card slot may be a card slot corresponding to a primary card of the terminal, and the second card slot may be a card slot corresponding to a secondary card of the terminal.

Further, the card information corresponding to the capability may include at least one of network information about a serving network of the card, a card index, a card slot index of the card, indication information about the primary card or the secondary card, indication information indicating whether the capability is applied to all cards, and indication information indicating whether the capability is independent of the cards. It is not hard to understand that, through the card information corresponding to the capability, it is able to help the network to acquire the terminal capability corresponding to the card through mapping.

Further, the serving network information corresponding to the capability may include at least one of network identification information about a serving network, indication information indicating whether the capability is applied to all serving networks, and indication information indicating whether the capability is independent of the serving network. Further, the network identification information may include an identifier of a public communications network (e.g., PLMN), and an identifier of a private communications network (e.g., a TypeA network identifier or a TypeB network identifier).

Further, the network type information corresponding to the capability may include at least one of a network type, indication information indicating whether the capability is applied to all network types, and indication information indicating whether the capability is independent of the network type. The network type information may indicate a capability of a network type currently supported by the terminal or a capability of network type currently not supported by the terminal.

Optionally, the indication information about the terminal capability identifier information may include at least one of indication information indicating whether the terminal capability identifier is invalid, indication information indicating whether the terminal capability identifier is to be deleted, indication information indicating whether the terminal capability identifier is to be suspended, indication information indicating whether the terminal capability identifier is to be recovered, indication information indicating whether the terminal capability identifier is requested to be changed, and indication information indicating whether the terminal capability identifier is requested to be allocated.

It should be appreciated that, the indication information about the terminal capability identifier information may be used to indicate all the capability identifier information of the terminal. One terminal may have one or more pieces of capability identifier information. For example, when the indication information indicating whether the terminal capability identifier is invalid indicates that the terminal capability identifier is invalid, it is able to help the first target end to delete or suspend all the capability identifier information in the terminal context.

Optionally, the operation information about the terminal capability identifier information may include at least one of disabled capability identifier information, invalid capability identifier information, deleted capability identifier information, suspended capability identifier information, newly-added capability identifier information and recovered capability identifier information.

It should be appreciated that, one terminal may have one or more pieces of capability identifier information. In one scenario, the operation information about the terminal capability identifier information may be used to indicate the disabled capability identifier information only when capabilities corresponding to a part of the pieces of capability identifier information are disabled. For example, when the terminal accesses to a 4G network and a 5G network capability is disabled, the terminal may notify the network of the capability identifier information about the 5G network capability. It is not hard to understand that, in a scenario where there is a plurality of pieces of capability identifier information, the operation information about the terminal capability identifier information is provided with unique advantages.

Optionally, the terminal position change information may include at least one of indication information indicating whether the terminal position has changed, an identifier of a first terminal (such as a device identifier (e.g., an IMEI) of the terminal) and an identifier of a second terminal (such as a device identifier (e.g., an IMEI) of the terminal). Optionally, when the terminal for the method is the card, the card may move from the first terminal to the second terminal. Because the identifier of the first terminal is different from the identifier of the second terminal, it is able to help the first target end to determine that the terminal position has changed.

Optionally, the terminal capability change information may include at least one of capability change indication information, capability change type information, capability variable information, first capability identifier information and second capability identifier information. It is not hard to understand that, through the terminal capability change information, it is able to indicate whether the terminal capability has changed and/or indicate a difference between the capability before the change and the capability after the change. Optionally, the capability change indication information may indicate whether the capability has changed.

To be specific, the first capability identifier information may be capability identifier information mapped to the terminal capability before the change, and the second capability identifier information may be capability identifier information mapped to the terminal capability after the change. Optionally, the first capability identifier information and/or the second capability identifier information may be used to represent the terminal capability change information. It is not hard to understand that, this may be applied to a mode where the capability identifier information is allocated by the terminal manufacturer.

It should be appreciated that, a capability variable may include at least one of a capability which has changed, a newly-added capability, and a deleted capability.

Further, the capability variable information may include at least one of capability identifier information about a capability variable, capability information about a capability which has changed, capability information about a newly-added capability, capability information about a disabled capability, capability identifier information about a capability before the change, capability identifier information about a capability after the change, capability identifier information about the newly-added capability, and capability identifier information about the disabled capability. Further, the capability information may include at least one of capability indication assistance information and a capability context. It is not hard to understand that, the capability variable information may be applied to a mode where the capability identifier is allocated by the network. Through the capability variable information, it is unnecessary for the terminal to transmit the complete terminal capability, so it is able to save the signaling, and support the network to deduce the changed capability and allocate the capability identifier information for the changed capability.

Optionally, the first capability identifier information and the capability variable information may be used to indicate a changed terminal capability. It is not hard to understand that, it is able to help the first target end to deduce the changed terminal capability.

Optionally, through the first capability identifier information and the identification information about the capability variable, it is able to deduce the changed terminal capability. For example, when a certain radio access type (Radio Access Type, RAT) capability has been disabled by the terminal, the changed terminal capability may be indicated through a large capability identifier (e.g., the first capability identifier information) and a disabled small capability identifier (e.g., the capability variable identification information). Alternatively, when one RAT capability has been enabled by the terminal, the changed terminal capability may be indicated through a large capability identifier and a newly-added small capability identifier.

Optionally, the first capability identifier information and the second capability identifier information may be used to indicate that the terminal capability has changed. It is not hard to understand that, upon the receipt of the second capability identifier information, the first target end may update the terminal capability identifier information as the second capability identifier information, or acquire the changed terminal capability in accordance with the second capability identifier information. Alternatively, the first target end may acquire a certain piece of capability variable information in accordance with the first capability identifier information and the second capability identifier information.

Optionally, through the indication information about the terminal capability identifier information and the second capability identifier information, it is able to update the terminal capability identifier information as the second capability identifier information, or help the first target end to acquire the changed terminal capability in accordance with the second capability identifier information.

Optionally, for example, the terminal capability identifier information may consist of four identifiers 2, 3, 4 and 5 which correspond to the 2G network capability, the 3G network capability, the 4G network capability and the 5G network capability respectively. When determining that the 5G network capability is to be disabled, the terminal may notify the network that the capability corresponding to the capability identifier 5 is to be disabled. The network may delete the capability identifier 5 in a corresponding terminal context.

Optionally, for example, the terminal capability identifier information may consist of a basic capability identifier 1, and capability identifiers A, B and C for additional capability variables. When the capability identifiers of a terminal UE1 are 1 and A, it means that the UE1 supports capabilities mapped to 1 and A, when the capability identifiers of a terminal UE2 are 1 and B, it means that the UE1 supports capabilities mapped to 1 and B, and so on. When the capability mapped to A is disabled by the UE 1 subsequently, the UE1 may notify the network that the capability mapped to A has been disabled. The network may delete the capability identifier A and reserve the capability identifier 1, so as to indicate that merely a basic capability mapped to the capability identifier 1 is reserved for the UE1. When the capability mapped to A is enabled by the UE1 again, the UE1 may notify it to the network, and the network may newly add or recover the capability identifier A.

In another possible embodiment of the present disclosure, for example, the terminal capability identifier information may consist of a full terminal type capability identifier 1, and disabled capability variable identifiers A, B and C, and the full terminal type capability identifier may include a terminal type and/or a software version. When capability identifiers of a terminal UE3 are 1 and A, it means that the UE3 supports capabilities mapped to the identifier 1 other than a capability mapped to A. When the capability mapped to A is enabled by the UE3 subsequently, the UE3 may notify the network to delete the identifier A. When the capability mapped to A is disabled by the UE3 again, the UE3 may notify the network to newly add the capability identifier A.

It should be appreciated that, through different capability identifier allocation modes, i.e., a mode with single or multiple identifiers, or a mode where the identifier is allocated by the network or the terminal manufacturer, it is able to save the capability reporting signaling and ensure the terminal capability at a terminal side to be synchronized with that at a network side after the terminal capability has been changed.

It should be further appreciated that, in the embodiments of the present disclosure, through performing the first related operation of the terminal capability, it is able to achieve such an effect of optimizing the reporting of the terminal capability when the terminal capability has been changed, thereby to save the capability reporting signaling, and enable a same terminal to meet different terminal capability requirements in different conditions.

As shown in FIG. 2, the present disclosure further provides in some embodiments a capability control method for a communications device. The communications device may include one of a terminal and a network-side device, and the terminal may include a relay having a terminal capability. The capability control method may include the following steps.

Step 201: receiving request information for acquiring a capability variable.

It should be appreciated that, in a possible embodiment of the present disclosure, the request information for acquiring the capability variable may be received from a second target end. The second target end may include, but not limited to, at least one of an RAN network element, a CN network element, an AMF, an MME and a capability management function network element.

Optionally, prior to Step 201, first information may be further transmitted to a first target end. Further, the first target end may include at least one of an RAN network element, a CN network element, an AMF, an MME and a capability management function network element. The first target end may be the same as, or different from, the second target end.

Step 202: transmitting capability variable information in accordance with the request information for acquiring the capability variable.

Optionally, the information about the capability variable may be transmitted to the second target end.

Optionally, the request information for acquiring the capability variable may include at least one of first capability identifier information, second capability identifier information, indication information indicating whether capability information about the capability variable is to be acquired, indication information indicating whether capability identifier information about the capability variable is to be acquired, and type information about the capability variable.

To be specific, the first capability identifier information may be capability identifier information mapped to a terminal capability before the change, and the second capability identifier information may be capability identifier information mapped to a terminal capability after the change.

In a possible embodiment of the present disclosure, the capability variable may be a changed capability.

In a possible embodiment of the present disclosure, the capability variable may be a difference between a terminal capability mapped to the second capability identifier information and a terminal capability mapped to the first capability identifier information.

Optionally, the type information about the capability variable may include at least one of network type information about the capability variable, serving network information about the capability variable, card slot information about the capability variable, and card information about the capability variable. It is not hard to understand that, the type information about the capability variable may be used to request the acquisition of information about the capability variable that matches the type information.

Further, the network type information about the capability variable may include at least one of a network type, indication information indicating whether a capability is applied to all network types, and indication information indicating whether the capability is independent of the network types. The network type information may indicate a capability of a network type currently supported by the terminal or a capability of a network type not supported by the terminal.

Further, the card slot information about the capability variable may include at least one of identification information about a card slot, a card slot index, information about a first card slot, information about a second card slot, indication information about a primary card slot or a secondary card slot, indication information indicating whether the capability is applied to all the card slots, and indication information indicating whether the capability is independent of the card slots. It should be appreciated that, during the implementation, the first card slot may be a card slot corresponding to a primary card of the terminal, and the second card slot may be a card slot corresponding to a secondary card of the terminal.

Further, the card information about the capability variable may include at least one of network information about a serving network of the card, a card index, a card slot index of the card, indication information about the primary card or the secondary card, indication information indicating whether the capability is applied to all cards, and indication information indicating whether the capability is independent of the cards. It is not hard to understand that, through the card information corresponding to the capability, it is able to help the network to acquire the terminal capability corresponding to the card through mapping.

Further, the serving network information about the capability variable may include at least one of network identification information about a serving network, indication information indicating whether the capability is applied to all serving networks, and indication information indicating whether the capability is independent of the serving network. Further, the network identification information may include an identifier of a public communications network (e.g., PLMN), and an identifier of a private communications network (e.g., a TypeA network identifier or a TypeB network identifier).

Optionally, the capability variable information may include at least one of capability identifier information about the capability variable, changed capability information, newly-added capability information, disabled capability information, capability identifier information about a capability before the change, capability identifier information about a capability after the change, capability identifier information about a newly-added capability, and capability identifier information about a disabled capability.

It should be appreciated that, in the embodiments of the present disclosure, through acquiring the capability variable information, it is able to achieve such an effect of optimizing the reporting of the terminal capability when the terminal capability is changed, thereby to save the capability reporting signaling, and enable a same terminal to meet different terminal capability requirements in different conditions.

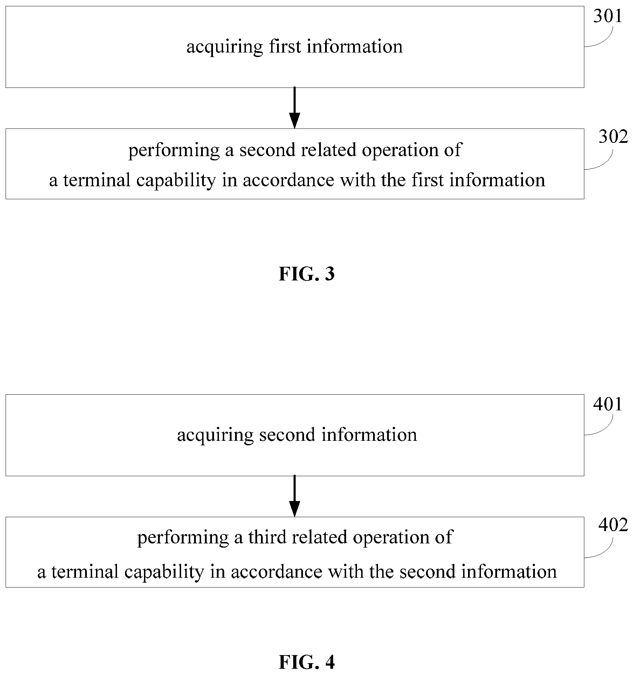

As shown in FIG. 3, the present disclosure further provides in some embodiments a capability control method for a network-side network element, which includes the following steps.

Step 301: acquiring first information.

Optionally, the first information may include at least one of terminal capability change information, terminal position change information, terminal capability information, indication information about terminal capability identifier information, and operation information about the terminal capability identifier information.

In a possible embodiment of the present disclosure, a first network-side network element may include at least one of a CN network element, an RAN network element, an AMF, an MME, and a capability management function network element.

In a possible embodiment of the present disclosure, the first information may be received from a third target end, and the third target end may include, but not limited to, at least one of a terminal and a second network-side network element.

The first network-side network element may include at least one of a CN network element, an RAN network element, an AMF, an MME, and a capability management function network element.

Optionally, the terminal capability identifier information may include at least one of terminal type information, capability indication assistance information, capability identifier application scope information and a terminal capability identifier.

In a possible embodiment of the present disclosure, the terminal capability identifier information may include the terminal type information and the capability indication assistance information.

In a possible embodiment of the present disclosure, the terminal capability identifier information may include the terminal capability identifier.

In a possible embodiment of the present disclosure, the terminal capability identifier information may include the terminal capability identifier and the capability indication assistance information.

In a possible embodiment of the present disclosure, the terminal capability identifier information may include the terminal capability identifier and the capability identifier application scope information.

Optionally, the terminal type information may include at least one of a terminal manufacturer identifier, a type allocation code (e.g., TAC) and a software version number (e.g., SVN).

Optionally, the capability indication assistance information may include at least one of card slot information corresponding to a capability, card information corresponding to a capability (e.g., card information about a physical card or an electronic card), serving network information corresponding to a capability, network type information corresponding to a capability, and capability type indication information.

Further, the card slot information corresponding to the capability may include at least one of identification information about a card slot, a card slot index, information about a first card slot, information about a second card slot, indication information about a primary card slot or a secondary card slot, indication information indicating whether the capability is applied to all the card slots, and indication information indicating whether the capability is independent of the card slots. It should be appreciated that, during the implementation, the first card slot may be a card slot corresponding to a primary card of the terminal, and the second card slot may be a card slot corresponding to a secondary card of the terminal.

Further, the card information corresponding to the capability may include at least one of network information about a serving network of the card, a card index, a card slot index of the card, indication information about the primary card or the secondary card, indication information indicating whether the capability is applied to all cards, and indication information indicating whether the capability is independent of the cards. It is not hard to understand that, through the card information corresponding to the capability, it is able to help the network to acquire the terminal capability corresponding to the card through mapping.

Further, the serving network information corresponding to the capability may include at least one of network identification information about a serving network, indication information indicating whether the capability is applied to all serving networks, and indication information indicating whether the capability is independent of the serving network. Further, the network identification information may include an identifier of a public communications network (e.g., PLMN), and an identifier of a private communications network (e.g., a TypeA network identifier or a TypeB network identifier).

Further, the network type information corresponding to the capability may include at least one of a network type, indication information indicating whether the capability is applied to all network types, and indication information indicating whether the capability is independent of the network type. The network type information may indicate a capability of a network type currently supported by the terminal or a capability of network type currently not supported by the terminal.

Optionally, the indication information about the terminal capability identifier information may include at least one of indication information indicating whether the terminal capability identifier is invalid, indication information indicating whether the terminal capability identifier is to be deleted, indication information indicating whether the terminal capability identifier is to be suspended, indication information indicating whether the terminal capability identifier is to be recovered, indication information indicating whether the terminal capability identifier is requested to be changed, and indication information indicating whether the terminal capability identifier is requested to be allocated.

It should be appreciated that, the indication information about the terminal capability identifier information may be used to indicate all the capability identifier information of the terminal. One terminal may have one or more pieces of capability identifier information. For example, when the indication information indicating whether the terminal capability identifier is invalid indicates that the terminal capability identifier is invalid, it is able to help the first target end to delete or suspend all the capability identifier information in a terminal context.

Optionally, the operation information about the terminal capability identifier information may include at least one of disabled capability identifier information, invalid capability identifier information, deleted capability identifier information, suspended capability identifier information, newly-added capability identifier information and recovered capability identifier information.

It should be appreciated that, one terminal may have one or more pieces of capability identifier information. In one scenario, the operation information about the terminal capability identifier information may be used to indicate the disabled capability identifier information only when capabilities corresponding to a part of the pieces of capability identifier information are disabled. For example, when the terminal accesses to a 4G network and a 5G network capability is disabled, the terminal may notify the network of the capability identifier information about the 5G network capability. It is not hard to understand that, in a scenario where there is a plurality of pieces of capability identifier information, the operation information about the terminal capability identifier information is provided with unique advantages.

Optionally, the terminal position change information may include at least one of indication information indicating whether the terminal position has changed, an identifier of a first terminal (such as a device identifier (e.g., an IMEI) of the terminal) and an identifier of a second terminal (such as a device identifier (e.g., an IMEI) of the terminal). Optionally, when the terminal for the method is the card, the card may move from the first terminal to the second terminal. Because the identifier of the first terminal is different from the identifier of the second terminal, it is able to help the first target end to determine that the terminal position has changed.

Optionally, the terminal capability change information may include at least one of capability change indication information, capability change type information, capability variable information, first capability identifier information and second capability identifier information. It is not hard to understand that, through the terminal capability change information, it is able to indicate whether the terminal capability has changed and/or indicate a difference between the capability before the change and the capability after the change. In a possible embodiment of the present disclosure, the capability change indication information may indicate whether the capability has changed.

To be specific, the first capability identifier information may be capability identifier information mapped to the terminal capability before the change, and the second capability identifier information may be capability identifier information mapped to the terminal capability after the change. In a possible embodiment of the present disclosure, the first capability identifier information and/or the second capability identifier information may be used to represent the terminal capability change information. It is not hard to understand that, this may be applied to a mode where the capability identifier information is allocated by the terminal manufacturer.

It should be appreciated that, a capability variable may include at least one of a capability which has changed, a newly-added capability, and a deleted capability.

Further, the capability variable information may include at least one of capability identifier information about a capability variable, capability information about a capability which has changed, capability information about a newly-added capability, capability information about a disabled capability, capability identifier information about a capability before the change, capability identifier information about a capability after the change, capability identifier information about the newly-added capability, and capability identifier information about the disabled capability. Further, the capability information may include at least one of capability indication assistance information and a capability context.

It is not hard to understand that, the capability variable information may be applied to a mode where the capability identifier is allocated by the network. Through the capability variable information, it is unnecessary for the terminal to transmit the complete terminal capability, so it is able to save the signaling, and support the network to deduce the changed capability and allocate the capability identifier information for the changed capability.

Step 302: performing a second related operation of the terminal capability in accordance with the first information.

In a possible embodiment of the present disclosure, in Step 302, the performing the second related operation of the terminal capability may include at least one of: changing the terminal capability identifier information; deleting or suspending the terminal capability identifier information; storing newly-added the terminal capability identifier information; recovering the terminal capability identifier information (which was suspended or deleted previously); allocating capability identifier information for a changed terminal capability; allocating capability identifier information for a capability variable; storing the first information; transmitting the first information to a first target end, the first target end being an RAN network element or a CN network element; deducing or mapping the terminal capability; changing the terminal capability; changing the first capability identifier information in the terminal context as the second capability identifier information; transmitting request information for acquiring the terminal capability to a second target end, the second target end being a terminal; and transmitting request information for acquiring a capability variable to a third target end, the third target end being a terminal.

Further, the changing the terminal capability identifier information may include changing the terminal capability identifier information in accordance with at least one of indication information about the terminal capability identifier information and operation information about the terminal capability identifier information.

Further, the changing the terminal capability identifier information may specifically include at least one of changing the first capability identifier information as the second capability identifier information, deleting the first capability identifier information, and setting the first capability identifier information as invalid. The first capability identifier information may be capability identifier information mapped to the terminal capability before the change, and the second capability identifier information may be capability identifier information mapped to the terminal capability after the change. In a possible embodiment of the present disclosure, when the first capability identifier information includes a plurality of capability identifiers, a part of the capability identifiers in the first capability identifier information may be deleted. In another possible embodiment of the present disclosure, when the first capability identifier information includes a plurality of capability identifiers, a part of the capability identifiers in the first capability identifier information may be set as invalid or suspended.

Further, the deleting or suspending the terminal capability identifier information may include deleting or suspending the terminal capability identifier information in accordance with at least one of indication information indicating that the terminal capability identifier is invalid, indication information indicating that the terminal capability identifier is to be deleted, invalid capability identifier information, deleted capability identifier information terminal position change information and terminal capability change information.

Further, the recovering the terminal capability identifier information may include recovering the terminal capability identifier information in accordance with at least one of indication information indicating that the terminal capability identifier is to be recovered, the terminal position change information and the terminal capability change information.

Further, the deducing or mapping the terminal capability may include deducing or mapping the terminal capability in accordance with at least one of the second capability identifier information, indication information about the terminal capability identification and operation information about the terminal capability identifier information.

Further, the changing the terminal capability may include changing the terminal capability in accordance with at least one of capability variable information and a terminal capability mapped to the second capability identifier information.

In a possible embodiment of the present disclosure, the changed terminal capability may be deduced through the first capability identifier information and the capability variable information.

In a possible embodiment of the present disclosure, through the first capability identifier information and the identification information about the capability variable, it is able to deduce the changed terminal capability. For example, when a certain radio access type (Radio Access Type, RAT) capability has been disabled by the terminal, the changed terminal capability may be indicated through a large capability identifier (e.g., the first capability identifier information) and a disabled small capability identifier (e.g., the capability variable identification information). Alternatively, when one RAT capability has been enabled by the terminal, the changed terminal capability may be indicated through a large capability identifier and a newly-added small capability identifier.

In a possible embodiment of the present disclosure, the first capability identifier information and the second capability identifier information may be used to indicate that the terminal capability has changed. It is not hard to understand that, upon the receipt of the second capability identifier information, the terminal capability identifier information may be changed as the second capability identifier information, or the changed terminal capability may be acquired in accordance with the second capability identifier information. Alternatively, a certain piece of capability variable information may be acquired in accordance with the first capability identifier information and the second capability identifier information.

In a possible embodiment of the present disclosure, through the indication information about the terminal capability identifier information and the second capability identifier information, it is able to update the terminal capability identifier information as the second capability identifier information, or acquire the changed terminal capability in accordance with the second capability identifier information.

In a possible embodiment of the present disclosure, for example, the terminal capability identifier information may consist of four identifiers 2, 3, 4 and 5 which correspond to a 2G network capability, a 3G network capability, a 4G network capability and a 5G network capability respectively. When determining that the 5G network capability is to be disabled, the terminal may notify the network that the capability corresponding to the capability identifier 5 is to be disabled. The network may delete the capability identifier 5 in a corresponding terminal context.

In a possible embodiment of the present disclosure, for example, the terminal capability identifier information may consist of four identifiers 2, 3, 4 and 5 which correspond to a 2G network capability, a 3G network capability, a 4G network capability and a 5G network capability respectively. When determining that the 5G network capability is to be disabled, the terminal may notify the network that the capability corresponding to the capability identifier 5 is to be disabled. The network may delete the capability identifier 5 in a corresponding terminal context.

In a possible embodiment of the present disclosure, for example, the terminal capability identifier information may consist of a basic capability identifier 1, and capability identifiers A, B and C for additional capability variables. When the capability identifiers of a terminal UE1 are 1 and A, it means that the UE1 supports capabilities mapped to 1 and A, when the capability identifiers of a terminal UE2 are 1 and B, it means that the UE1 supports capabilities mapped to 1 and B, and so on. When the capability mapped to A is disabled by the UE 1 subsequently, the UE1 may notify the network that the capability mapped to A has been disabled. The network may delete the capability identifier A and reserve the capability identifier 1, so as to indicate that merely a basic capability mapped to the capability identifier 1 is reserved for the UE1. When the capability mapped to A is enabled by the UE1 again, the UE1 may notify it to the network, and the network may newly add or recover the capability identifier A.

In another possible embodiment of the present disclosure, for example, the terminal capability identifier information may consist of a full terminal type capability identifier 1, and disabled capability variable identifiers A, B and C, and the full terminal type capability identifier may include a terminal type and/or a software version. When capability identifiers of a terminal UE3 are 1 and A, it means that the UE3 supports capabilities mapped to the identifier 1 other than a capability mapped to A. When the capability mapped to A is enabled by the UE3 subsequently, the UE3 may notify the network to delete the identifier A. When the capability mapped to A is disabled by the UE3 again, the UE3 may notify the network to newly add the capability identifier A.

In a possible embodiment of the present disclosure, the network-side network element may deduce an up-to-date terminal capability in accordance with the terminal capability mapped to the first capability identifier information and the capability variable information. In another possible embodiment of the present disclosure, the network-side network element may deduce the terminal capability mapped to the second capability identifier information in accordance with the terminal capability mapped to the first capability identifier information and the capability variable information. It is not hard to understand that, when the terminal capability mapped to the second capability identifier information does not exist, the network-side network element may deduce the up-to-date terminal capability in accordance with the existing terminal capability mapped to the first capability identifier information and the capability variable information.

It should be appreciated that, in the embodiments of the present disclosure, through the second related operation of the terminal capability, it is able to achieve such an effect of optimizing the reporting of the terminal capability when changing the terminal capability, thereby to save the capability reporting signaling, and enable a same terminal to meet different terminal capability requirements in different conditions.

As shown in FIG. 4, the present disclosure further provides in some embodiments a capability control method for a network-side network element, which includes the following steps.

Step 401: acquiring second information.

Optionally, the second information may include at least one of indication information indicating that a terminal does not support capability signaling optimization, de-registration request information and registration request information.

In a possible embodiment of the present disclosure, the network-side network element may include at least one of a CN network element, an RAN network element, an AMF, an MME, and a capability management function network element.

In a possible embodiment of the present disclosure, the indication information indicating that the terminal does not support the capability signaling optimization may be indication information indicating that the terminal is changed from supporting the capability signaling optimization to not supporting the capability signaling optimization.

Step 402: performing a third related operation of a terminal capability in accordance with the second information.

Optionally, in Step 401, the acquiring the second information may include acquiring the indication information indicating that the terminal does not support the capability signaling optimization in accordance with at least one of a condition where a terminal position changes and a condition where indication information about the capability signaling optimization fails to be received.

In a possible embodiment of the present disclosure, the change of the terminal position may be determined when terminal position change information has been received.

Optionally, the terminal position change information may include at least one of indication information indicating whether the terminal position has changed, an identifier of a first terminal (such as a device identifier (e.g., an IMEI) of the terminal) and an identifier of a second terminal (such as a device identifier (e.g., an IMEI) of the terminal). In a possible embodiment of the present disclosure, when the terminal for the method is a card, the card may move from the first terminal to the second terminal. Because the identifier of the first terminal is different from the identifier of the second terminal, it is able to determine that the terminal position has changed.

In a possible embodiment of the present disclosure, when the indication information about the capability signaling optimization has not been received yet, it means that the received registration request information does not include the indication information about the capability signaling optimization.

Optionally, in Step 402, the performing the third related operation of the terminal capability may include at least one of: changing a capability signaling optimization capability of the terminal; deleting or suspending the terminal capability identifier information; transmitting the second information to a fourth target end, the fourth target end being an RAN network element or a CN network element; and transmitting request information for acquiring the terminal capability to a fifth target end, the fourth target end being a terminal.

In a possible embodiment of the present disclosure, the deleted or suspended terminal capability identifier information may be an existing terminal capability identifier, or a terminal capability identifier that has been registered. For example, in a scenario where a card moves from a first terminal to a second terminal, a de-registration procedure needs to be performed by the first terminal, a registration procedure needs to be performed by the second terminal, and a re-registration procedure needs to be performed by the network. In order to enable the network to perform the re-registration procedure successfully, existing capability identifier information in an original registration in the network may be deleted.

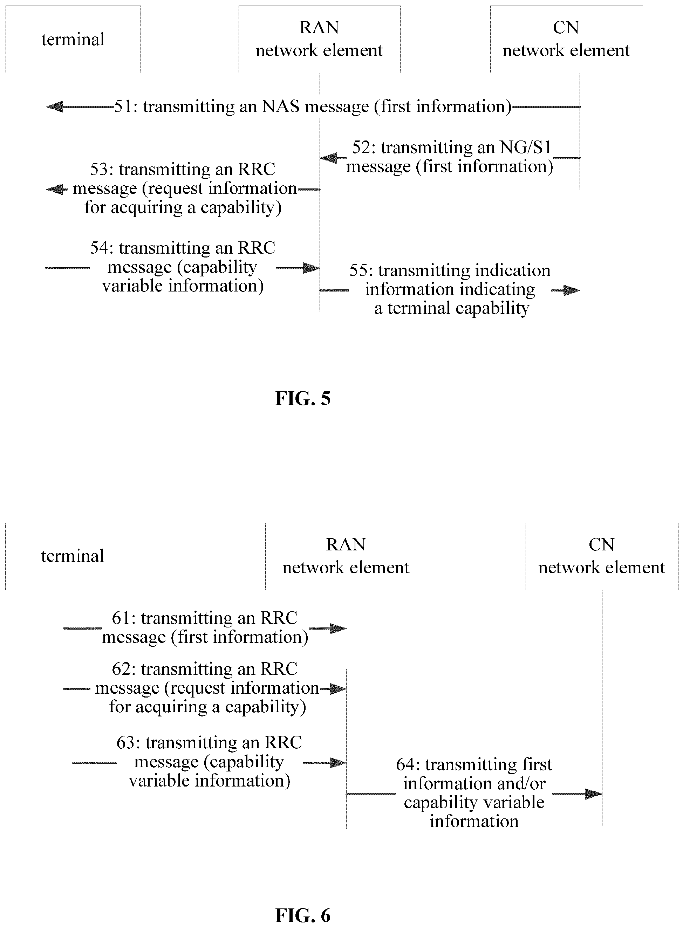

Some embodiments of the present disclosure will be described hereinafter in details in conjunction with FIGS. 5-13.

FIG. 5 mainly shows a procedure of transmitting, by the terminal, the first information to the CN network element. As shown in FIG. 5, a corresponding transmission procedure may include the following steps.

Step 51: transmitting, by the terminal, an NAS message to the CN network element through the RAN network element. The NAS message may include the first information.

It should be appreciated that, the CN network may be one of an AMF, a PCF, a PCRF, an operation administration and maintenance (Operation Administration and Maintenance, OAM), and a capability management function network element.

Optionally, the CN network element may acquire the terminal capability through mapping in accordance with the first information. The CN network element may update the first capability identifier information as the second capability identifier information.

In a possible embodiment of the present disclosure, when the first information includes the second capability identifier information (the changed capability identifier information), the CN network element may determine whether there is a terminal capability mapped to the second capability identifier information. When there is not the terminal capability, the CN network element may acquire the terminal capability mapped to the second capability identifier information from the RAN network element. Optionally, when acquiring the terminal capability mapped to the second capability identifier information, the CN network element may merely acquire the capability variable.

In a possible embodiment of the present disclosure, when the first information includes the first capability identifier information (the capability identifier information before the change) and the capability variable information, the CN network element may acquire an up-to-date terminal capability in accordance with the terminal capability mapped to the first capability identifier information and the capability variable information.

Step 52: transmitting, by the CN network element, an NG or S1 (NG/S 1 for short) message to the RAN network element. The NG/S1 message may include the first information.

Optionally, the RAN network element may acquire the terminal capability through mapping in accordance with the first information, The RAN network element may update the first capability identifier information as the second capability identifier information.

In a possible embodiment of the present disclosure, when the first information includes the second capability identifier information (the changed capability identifier information), the RAN network element may determine whether there is the terminal capability mapped to the second capability identifier information, and then the procedure may be terminated.

In a possible embodiment of the present disclosure, when there is no terminal capability mapped to the second capability identifier information, the RAN network element may acquire the terminal capability mapped to the second capability identifier information form the terminal. When acquiring the terminal capability mapped to the second capability identifier information, the RAN network element may merely acquire the capability variable, and then proceed to Step 53.

Step 53: optionally, initiating, by the RAN network element, a request for acquiring the terminal capability to the terminal through a Radio Resource Control (RRC) message. Optionally, the RRC message may include the request information for acquiring the capability variable.

Step 54: optionally, transmitting, by the terminal, an RRC message for terminal capability related information to the RAN network element. Optionally, the RRC message may include the capability variable information.

It should be appreciated that, the RAN network element may deduce the terminal capability mapped to the second capability identifier information in accordance with the terminal capability mapped to the first capability identifier information and the capability variable information.

Step 55: optionally, transmitting, by the RAN network element, a terminal capability indication message to the CN network element. Optionally, the message may include the capability variable information.

It should be appreciated that, the CN network element may deduce the terminal capability mapped to the second capability identifier information in accordance with the terminal capability mapped to the first capability identifier information and the capability variable information.

FIG. 6 mainly shows a procedure of transmitting, by the terminal, the first information to the RAN network element. As shown in FIG. 6, a corresponding transmission procedure may include the following steps.

Step 61: transmitting, by the terminal, an RRC message to the RAN network element. The RRC message may include the first information.

Optionally, the RAN network element may acquire the terminal capability through mapping in accordance with the first information. The RAN network element may update the first capability identifier information as the second capability identifier information.

In a possible embodiment of the present disclosure, when the first information includes the second capability identifier information but there is no terminal capability mapped to the second capability identifier information in the RAN network element, the RAN network element may acquire the terminal capability mapped to the second capability identifier information from the terminal. When acquiring the terminal capability mapped to the second capability identifier information, the RAN network element may merely acquire the capability variable, and then proceed to Step 62.

Step 62: optionally, initiating, by the RAN network element, a request for acquiring the terminal capability to the terminal through an RRC message. The RRC message may include the request information for acquiring the capability variable.

Step 63: optionally, transmitting, by the terminal, an RRC message for terminal capability related information to the RAN network element. Optionally, the RRC message may include the capability variable information.

It should be appreciated that, the RAN network element may deduce the terminal capability mapped to the second capability identifier information in accordance with the terminal capability mapped to the first capability identifier information and the capability variable information.

Step 64: transmitting, by the RAN network element, the first information and/or the capability variable information to the CN network element.

It should be appreciated that, the CN network element may be one of an AMF, a PCF, a PCRF, an OAM and a capability management function network element.

Optionally, the CN network element may acquire through mapping, or deduce, the terminal capability in accordance with the first information and/or the capability variable information.

Optionally, the CN network element may deduce the terminal capability mapped to the second capability identifier information in accordance with the first information and/or the capability variable information.

Optionally, the CN network element may update the first capability identifier information as the second capability identifier information.

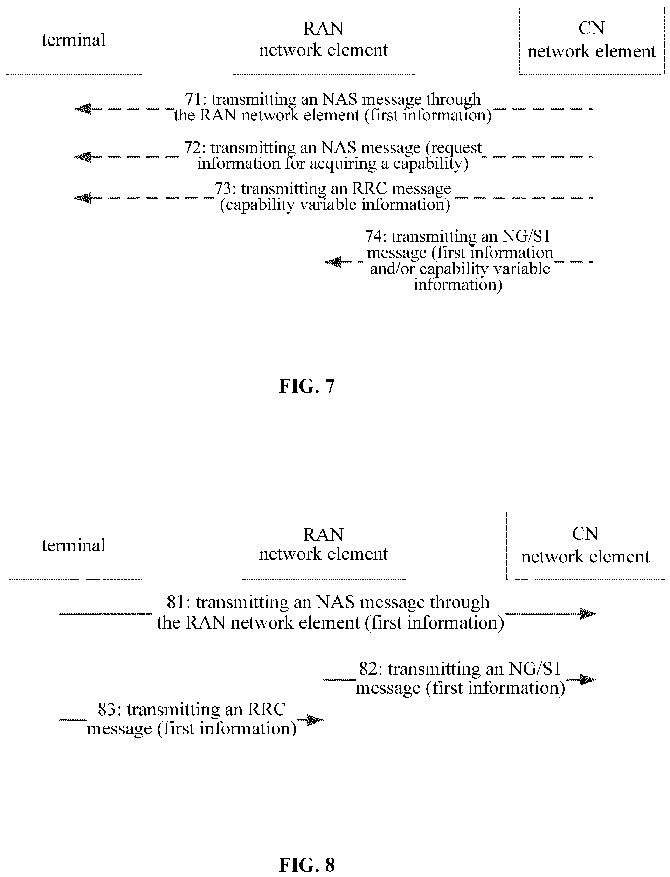

FIG. 7 mainly shows a procedure of transmitting, by the terminal, the first information to the CN network element. As shown in FIG. 7, a corresponding transmission procedure may include the following steps.

Step 71: transmitting, by the terminal, an NAS message to the CN network element through the RAN network element. The NAS message may include the first information.

It should be appreciated that, the CN network element may be one of an AMF, a PCF, a PCRF, an OAM, and a capability management function network element.

Optionally, the CN network element may acquire the terminal capability through mapping in accordance with the first information.

Optionally, when the first information includes the second capability identifier information (the changed capability identifier information), the CN network element may determine whether there is the terminal capability mapped to the second capability identifier information. When there is no terminal capability, the CN network element may acquire the terminal capability mapped to the second capability identifier information from the RAN network element. Optionally, when acquiring the terminal capability mapped to the second capability identifier information, the CN network element may merely acquire the capability variable, and then proceed to Step 72.

In a possible embodiment of the present disclosure, when the first information includes the first capability identifier information (the capability identifier information before the change) and the capability variable information, the CN network element may acquire an up-to-date terminal capability in accordance with the terminal capability mapped to the first capability identifier information and the capability variable information.

In a possible embodiment of the present disclosure, when the first information includes the second capability identifier information (the changed capability identifier information) and there is the terminal capability mapped to the second capability identifier information in the CN network element, it may proceed to Step 74.

Step 72: optionally, initiating, by the CN network element, a request for acquiring the terminal capability to the terminal through an NAS message. Optionally, the NAS message may include the request information for acquiring the capability variable.

Step 73: optionally, transmitting, by the terminal, an RRC message for terminal capability related information to the CN network element. Optionally, the RRC message may include the capability variable information.

It should be appreciated that, the CN network element may deduce the terminal capability mapped to the second capability identifier information in accordance with the terminal capability mapped to the first capability identifier information and the capability variable information.

Optionally, the CN network element may update the first capability identifier information as the second capability identifier information.

Step 74: optionally, transmitting, by the CN network element, an NG/S1 message to the RAN network element. The NG/S1 message may include the first information and/or the capability variable information.

Optionally, the CN network element may acquire through mapping (or deduce) the terminal capability in accordance with the first information and/or the capability variable information.

Optionally, the CN network element may deduce the terminal capability mapped to the second capability identifier information in accordance with the first information and/or the capability variable information.

FIG. 8 mainly shows a procedure of allocating, by the CN network element, the second capability identifier information for the terminal in accordance with the first information. As shown in FIG. 8, a corresponding allocation procedure may include the following steps.

Step 81: transmitting, by the terminal, an NAS message to the CN network element through the RAN network element. The NAS message may include the first information.

It should be appreciated that, the CN network element may be one of an AMF, a PCF, a PCRF, an OAM and a capability management function network element. The CN network element may deduce the terminal capability in accordance with the first information.

In a possible embodiment of the present disclosure, when the first information includes at least one of second type information (e.g., TAC/SVN), second capability indication assistance information and capability variable information, the CN network element may allocate the second capability identifier information, and transmit it to the RAN network element and the terminal.

In a possible embodiment of the present disclosure, when the first information includes at least one of first type information (e.g., TAC/SVN), first capability indication assistance information and the capability variable information, the CN network element may allocate the second capability identifier information, and transmit it to the RAN network element and the terminal.

In a possible embodiment of the present disclosure, the CN network element may allocate the identification information about the capability variable in accordance with the capability variable information, and transmit it to the RAN network element and the terminal.

Step 82: transmitting, by the CN network element, an NG/S1 message to the RAN network element. The NG/S1 message may include the first information.

Optionally, the RAN network element may acquire through mapping the terminal capability in accordance with the first information. The first information may be that mentioned in the embodiments as shown in FIG. 1.

Optionally, the RAN network element may update the first capability identifier information as the second capability identifier information.

Step 83: optionally, transmitting, by the RAN network element, an RRC message to the terminal, or forwarding the NAS message to the terminal. Optionally, the RRC message or NAS message may include the first information.

Optionally, the first information may be that mentioned in the embodiments as shown in FIG. 1. The terminal may update the first capability identifier information as the second capability identifier information.

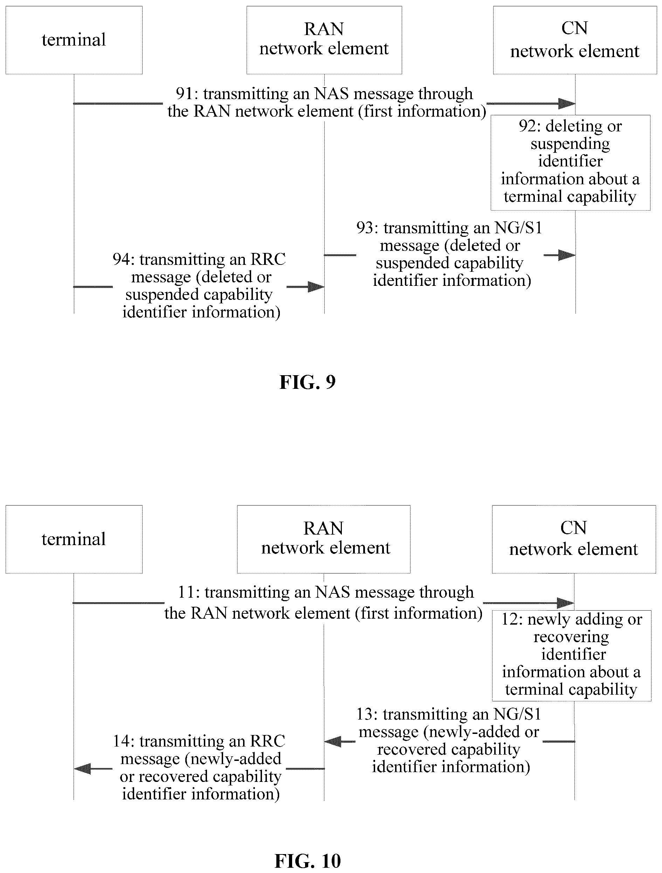

FIG. 9 mainly shows a procedure of requesting, by the terminal, the CN network element to delete a certain piece of capability identifier information. As shown in FIG. 9, a corresponding requesting procedure may include the following steps.

Step 91: transmitting, by the terminal, an NAS message to the CN network element through the RAN network element. The NAS message may include the first information.

It should be appreciated that, the CN network element may be one of an AMF, a PCF, a PCRF, an OAM, and a capability management function network element. The CN network element may deduce the terminal capability in accordance with the first information.

Step 92: optionally, deleting or suspending, by the CN network element, a certain piece of terminal capability identifier information in accordance with the first information.

In a possible embodiment of the present disclosure, the first information may include the first capability identifier information and the capability variable information.

In a possible embodiment of the present disclosure, the first information may include the second capability identifier information and the capability variable information.

Step 93: optionally, transmitting, by the CN network element, an NG/S1 message to the RAN network element. The NG/S1 message may include deleted or suspended capability identifier information.

Step 94: optionally, transmitting, by the RAN network element, an RRC message to the terminal or forwarding the NAS message to the terminal. Optionally, the RRC message or NAS message may include the deleted or suspended capability identifier information, and acknowledgement information about the deleted or suspended capability identifier information.

FIG. 10 mainly shows a procedure of requesting, by the terminal, the CN network element to newly add a certain piece of capability identifier information. As shown in FIG. 10, a corresponding requesting procedure may include the following steps.

Step 11: transmitting, by the terminal, an NAS message to the CN network element through the RAN network element. The NAS message may include the first information.

It should be appreciated that, the CN network element may be one of an AMF, a PCF, a PCRF, an OAM, and a capability management function network element. The CN network element may deduce the terminal capability in accordance with the first information.

Step 12: optionally, newly adding or recovering, by the CN network element a certain piece of terminal capability identifier information in accordance with the first information.

In a possible embodiment of the present disclosure, the first information may include the first capability identifier information and the capability variable information.

In a possible embodiment of the present disclosure, the first information may include the second capability identifier information and the capability variable information.

Step 13: optionally, transmitting, by the CN network element, an NG/S1 message to the RAN network element. The NG/S1 message may include newly-added or recovered capability identifier information.

Step 14: optionally, transmitting, by the RAN network element an RRC message to the terminal or forwarding the NAS message to the terminal. Optionally, the RRC message or NAS message may include newly-added or recovered capability identifier information, and acknowledgement information about the newly-added or received capability identifier information.

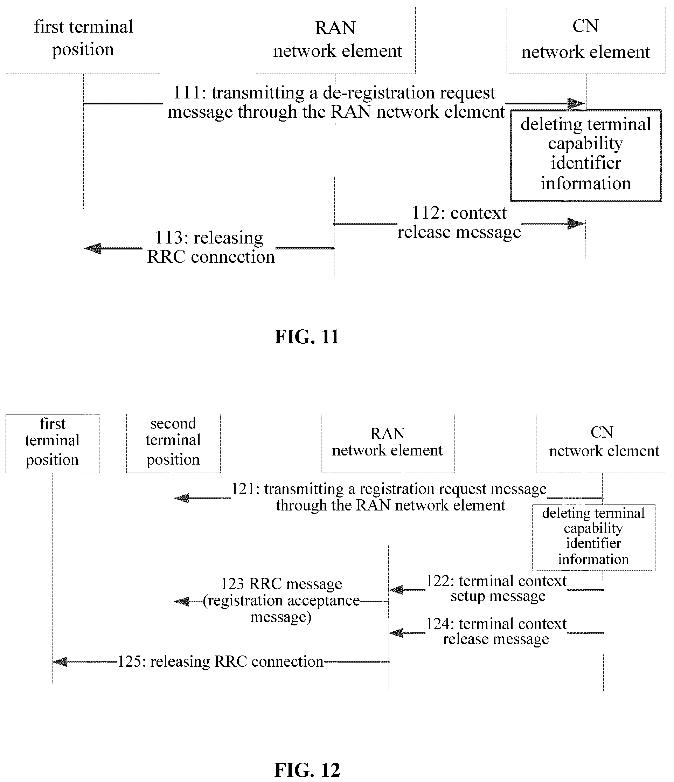

FIG. 11 mainly shows a terminal position change procedure. In this embodiment of the present disclosure, a card of a serving network, e.g., a UICC or SIM card, is pulled out of one device and inserted into another device. As shown in FIG. 11, a corresponding position change procedure may include the following steps.

Step 111: pulling the card out of a first device, and transmitting, by the first device (subsequently called as a first terminal position for short), an NAS message, e.g., a de-registration request message, to the CN network element through the RAN network element. Optionally, the de-registration request message may include the first information.

It should be appreciated that, the CN network element may be one of an AMF, a PCF, a PCRF, an OAM and a capability management function network element. The first information may be that mentioned in the embodiments as shown in FIG. 1.

Optionally, the CN network element may delete the terminal capability identifier information from the terminal context in accordance with the received de-registration request message and/or the first information.

Step 112: transmitting, by the CN network element, a terminal context release message to the RAN network element.

Step 113: optionally, transmitting, by the RAN network element, an RRC connection release message to the first terminal position.

FIG. 12 mainly shows a terminal position change procedure. In this embodiment, a card of a serving network, e.g., a UICC or SIM card, is pulled out of one device and inserted into another device. As shown in FIG. 12, a corresponding position change procedure may include the following steps.

Step 121: pulling the card out of a first device and inserting it into a second device, and transmitting, by the card or the second device (subsequently called as a second terminal position for short), an NAS message, e.g., a registration request message, to the CN network element through the RAN network element. Optionally, the registration request message may include the first information.

It should be appreciated that, the CN network element may be one of an AMF, a PCF, a PCRF, an OAM, and a capability management function network element. The first information may be that mentioned in the embodiments as shown in FIG. 1.

Optionally, the CN network element may delete the terminal capability identifier information from the terminal context in accordance with at least one of a condition where the second information is not received, a condition where the first information is not received, and a condition where the registration request message is not received. The second information may be that mentioned in the embodiments as shown in FIG. 4.

In a possible embodiment of the present disclosure, the terminal has registered through the first terminal position (the first device), and the terminal context has already existed in the CN network element.

Step 122: transmitting, by the CN network element, a terminal text setup message to the RAN network element. The message may include a registration acceptance message.

Step 123: transmitting, by the RAN network element, an RRC Message to the second terminal position. The RRC message may include the registration acceptance message.

Step 124: when the CN network element determines that there is a context of the first terminal position in the RAN network element, transmitting, by the CN network element, a message for releasing the terminal context to the RAN network element.

Step 125: optionally, transmitting, by the RAN network element, an RRC connection release message to the first terminal position.

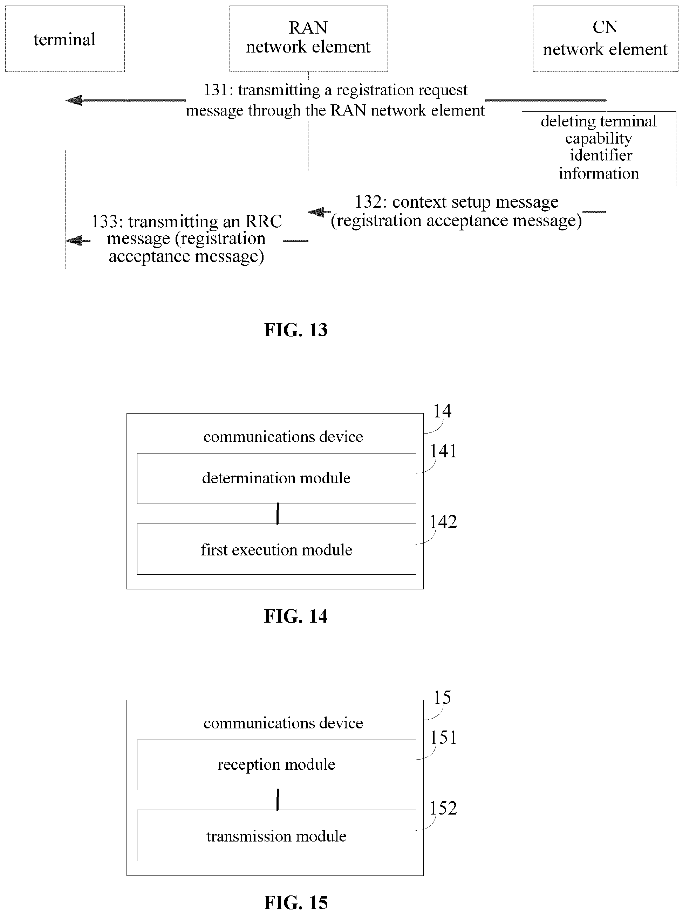

FIG. 13 mainly shows a signaling optimization capability change procedure. As shown in FIG. 13, a corresponding change procedure may include the following steps.

Step 131: transmitting, by the terminal, an NAS message, e.g., a registration request message, to the CN network element through the RAN network element. Optionally, the registration request message may not include indication information indicating a terminal capability signaling optimization capability.

It should be appreciated that, the CN network element may be one of an AMF, a PCF, a PCRF, an OAM, and a capability management function network element.

Optionally, when there is a terminal context in the CN network element and the terminal context includes the terminal capability identifier information, the CN network element may delete the terminal capability identifier information.

Step 132: transmitting, by the CN network element, a terminal context setup message to the RAN network element. The message may include a registration acceptance message.

Step 133: transmitting, by the RAN network element, an RRC message to the terminal. The RRC message may include the registration acceptance message.

The capability control method has been described hereinabove, and the terminal and the network-side network element will be described hereinafter in conjunction with the embodiments and drawings.

As shown in FIG. 14, the present disclosure further provides in some embodiments a communications device 14, which is one of a terminal and a network side device. The communications device may include: a determination module 141 configured to determine whether a predetermined condition has been met, the predetermined condition including at least one of a condition where a terminal capability changes, a condition where a terminal position changes, a condition where a card in the terminal is deleted, a condition where a card is newly added in the terminal, and a condition where the terminal does not support capability signaling optimization after the position has changed; and a first execution module 142 configured to, when the predetermined condition has been met, perform a first related operation of the terminal capability.

Optionally, the first execution module 142 is specifically configured to update terminal capability identifier information and transmit first information. The first information may include at least one of terminal capability change information, terminal position change information, terminal capability information, indication information about terminal capability identifier information, and operation information about the terminal capability identifier information.

It should be appreciated that, a procedure of changing the terminal capability identifier information may be that mentioned in the embodiments as shown in FIG. 1, and the terminal capability identifier information may be that mentioned in the embodiments as shown in FIG. 1. For example, the terminal capability identifier information may include at least one of terminal type information, capability indication assistance information, capability identifier application scope information and a terminal capability identifier.

Optionally, the indication information about the terminal capability identifier information may be that mentioned in the embodiments as shown in FIG. 1, the operation information about the terminal capability identifier information may be that mentioned in the embodiments as shown in FIG. 1, the terminal capability change information may be that mentioned in the embodiments as shown in FIG. 1, and the terminal position change information may be that mentioned in the embodiments as shown in FIG. 1.

It should be appreciated that, in the embodiments of the present disclosure, through the first related operation of the terminal capability, it is able to achieve such an effect of optimizing the reporting of the terminal capability when changing the terminal capability, thereby to save the capability reporting signaling, and enable a same terminal to meet different terminal capability requirements in different conditions.

As shown in FIG. 15, the present disclosure further provides in some embodiments a communications device 15, which is one of a terminal and a network side device. The communications device includes: a reception module 151 configured to receive request information for acquiring a capability variable; and a transmission module 152 configured to transmit capability variable information in accordance with the request information for acquiring the capability variable.

It should be appreciated that, the request information for acquiring the capability variable may be that mentioned in the embodiments as shown in FIG. 1, and the capability variable information may be that mentioned in the embodiments as shown in FIG. 1.

It should be appreciated that, in the embodiments of the present disclosure, through acquiring the capability variable information, it is able to achieve such an effect of optimizing the reporting of the terminal capability when changing the terminal capability, thereby to save the capability reporting signaling, and enable a same terminal to meet different terminal capability requirements in different conditions.

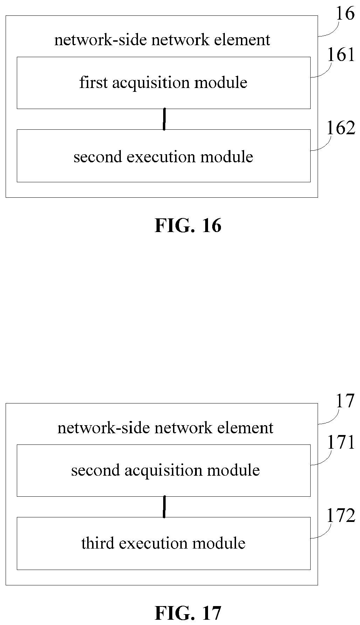

As shown in FIG. 16, the present disclosure further provides in some embodiments a network-side network element 16, which includes: a first acquisition module 161 configured to acquire first information, the first information including at least one of terminal capability change information, terminal position change information, terminal capability information, indication information about terminal capability identifier information, and operation information about the terminal capability identifier information; and a second execution module 162 configured to perform a second related operation of a terminal capability in accordance with the first information.

It should be appreciated that, the terminal capability identifier information may be that mentioned in the embodiments as shown in FIG. 1. For example, the terminal capability identifier information may include at least one of terminal type information, capability indication assistance information, capability identifier application scope information and a terminal capability identifier.

Optionally, the indication information about the terminal capability identifier information may be that mentioned in the embodiments as shown in FIG. 1, the operation information about the terminal capability identifier information may be that mentioned in the embodiments as shown in FIG. 1, the terminal capability change information may be that mentioned in the embodiments as shown in FIG. 1, and the terminal position change information may be that mentioned in the embodiments as shown in FIG. 1.

Optionally, the second related operation of the terminal capability performed by the second execution module 162 may be that mentioned in the embodiments as shown in FIG. 3.

It should be appreciated that, in the embodiments of the present disclosure, through the second related operation of the terminal capability, it is able to achieve such an effect of optimizing the reporting of the terminal capability when changing the terminal capability, thereby to save the capability reporting signaling, and enable a same terminal to meet different terminal capability requirements in different conditions.

As shown in FIG. 17, the present disclosure further provides in some embodiments a network-side network element 17, which includes: a second acquisition module 171 configured to acquire second information, the second information including at least one of indication information indicating that the terminal does not support capability signaling optimization, de-registration request information and registration request information; and a third execution module 172 configured to perform a third related operation of a terminal capability in accordance with the second information.

Optionally, the second acquisition module 171 is specifically configured to acquire indication information indicating that the terminal does not support capability signaling optimization in accordance with at least one of a condition where a terminal position changes and a condition where indication information about the capability signaling optimization fails to be received.

It should be appreciated that, the third related operation of the terminal capability performed by the third execution module 172 may be that mentioned in the embodiments as shown in FIG. 4.

In addition, the present disclosure further provides in some embodiments a terminal, which includes a processor, a memory, and a computer program stored in the memory and executed by the processor. The computer program is executed by the processor so as to implement the steps of the above-mentioned capability control method for the terminal, with a same technical effect, which will not be particularly defined herein.

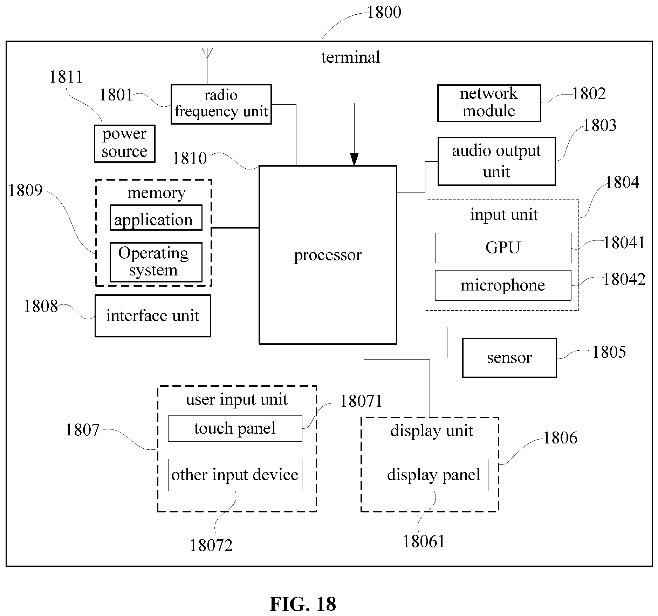

To be specific, FIG. 18 shows a hardware structure of a terminal according to one embodiment of the present disclosure. The terminal 1800 may include, but not limited to, a radio frequency unit 1801, a network module 1802, an audio output unit 1803, an input unit 1804, a sensor 1805, a display unit 1806, a user input unit 1807, an interface unit 1808, a memory 1809, a processor 1810, and a power source 1811. It should be appreciated that, the structure in Fig. 18 shall not be construed as limiting the terminal device. The terminal device may include more or fewer members, or some members may be combined, or the members may be arranged in different modes. In the embodiments of the present disclosure, the terminal may include, but not limited to, mobile phone, tablet computer, laptop computer, personal digital assistant, vehicle-mounted terminal, wearable device or pedometer.

The processor 1810 is configured to: determine whether a predetermined condition has been met, the predetermined condition including at least one of a condition where a terminal capability changes, a condition where a terminal position changes, a condition where a card in the terminal is deleted, a condition where a card is newly added in the terminal, and a condition where the terminal does not support capability signaling optimization after the position has changed; and when the predetermined condition has been met, perform a first related operation of the terminal capability.

Alternatively, the interface unit 1808 is configured to: receive request information for acquiring a capability variable; and transmit capability variable information in accordance with the request information for acquiring the capability variable.

According to the embodiments of the present disclosure, it is able to achieve such an effect of optimizing the reporting of the terminal capability when changing the terminal capability, thereby to save the capability reporting signaling, and enable a same terminal to meet different terminal capability requirements in different conditions.

It should be appreciated that, in the embodiments of the present disclosure, the radio frequency unit 1801 may transmit and receive signals during the information transmission or phone call. To be specific, the radio frequency unit may, upon the receipt of downlink data from a base station, transmit the downlink data to the processor 1810 for subsequent treatment. In addition, the radio frequency unit may transmit uplink data to the base station. Usually, the radio frequency unit 1801 may include, but not limited to, an antenna, at least one amplifier, a transceiver, a coupler, a low-noise amplifier and a duplexer. In addition, the radio frequency unit 1801 may communicate with a network and the other devices via a wireless communications system.

The network module 1802 is configured to enable a user to access the broadband Internet in a wireless manner, e.g., help the user to receive and send an e-mail, browse a web or access a streaming media.

The audio output unit 1803 is configured to convert audio data received by the radio frequency unit 1801 or the network module 1802, or audio data stored in the memory 1809, into an audio signal and output the audio signal as a sound. In addition, the audio output unit 1803 is further configured to provide an audio output related to a specific function executed by the terminal 1800 (e.g., a sound occurring when a calling signal or a message has been received). The audio output unit 1803 may include a loudspeaker, a buzzer and a receiver.

The input unit 1804 is configured to receive an audio or video signal. It may include a graphics processing unit (Graphics Processing Unit, GPU) 18041 and a microphone 18042. The GPU 18041 is configured to process image data of a static image or video acquired by an image collection unit (e.g., a camera) in a video capturing mode or an image capturing mode, and a processed image frame may be displayed by the display unit 1806. The image frame processed by the GPU 18041 may be stored in the memory 1809 (or any other storage medium) or transmitted via the radio frequency unit 1801 or network module 1802. The microphone 18042 is configured to receive a sound, and convert the sound into voice data. In a call mode, the processed audio data may be converted into data in a format capable of being transmitted by the radio frequency unit 1801 to a mobile communications base station.

The at least one sensor 1805 may include a light sensor, a movement sensor and the other sensors. To be specific, the light sensor may include an ambient light sensor or a proximity sensor. The ambient light sensor is configured to adjust a brightness value of a display panel 18061 in accordance with ambient light. The proximity sensor is configured to turn off the display panel 18061 and/or a backlight source. As one of the movement sensors, an accelerometer may detect acceleration in various directions (usually a three-axis accelerometer), and detect a level and a direction of a gravity force when in a static state. Through the accelerometer, it is able to identify a posture of the electronic device (e.g., perform a switching operation between portrait and landscape orientations, play relevant games, and calibrate a posture of a magnetometer), and perform vibration-related functions (e.g., count steps and strikes). The sensor 1805 may further include a fingerprint sensor, a pressure sensor, an iris sensor, a molecule sensor, a gyroscope, a barometer, a hygrometer, a thermometer or an infrared sensor, which will not be particularly defined herein.

The display unit 1806 is configured to display information inputted by the user or provided to the user. The display unit 1806 may include the display panel 18061, e.g., a liquid crystal display (Liquid Crystal Display, LCD) panel, or an organic light-emitting diode (Organic Light-Emitting Diode, OLED) panel.

The user input unit 1807 is configured to receive digital or character information inputted by the user, and generate a key signal input related to user settings and function control of the terminal. To be specific, the user input unit 1807 may include a touch panel 18071 and an input device 18072. The touch panel 18071, also called as touch screen, is configured to collect a touch operation made by the user on or in proximity to the touch panel (e.g., an operation made by the user through any appropriate object or attachment (e.g., finger or stylus) on or in the proximity to the touch panel 18071). The touch panel 18071 may include a touch detection unit and a touch controller. The touch detection unit is configured to detect a touch position and a signal generated due to the touch operation, and to transmit the signal to the touch controller. The touch controller is configured to receive touch information from the touch detection unit, convert it into coordinates of a touch point, transmit the coordinates to the processor 1810, and receive and execute a command from the processor 1810. In addition, the touch panel 18071 may be of a resistive type, a capacitive type, an infrared type or a surface acoustic wave type. The other input device 18072 may include, but not limited to, a physical keyboard, a functional button (e.g., a volume control button or an on/off button), a trackball, a mouse, and a joystick, which will not be particularly defined herein.

Further, the touch panel 18071 may cover the display panel 18061. When the touch operation made on or in proximity to the touch panel 18071 has been detected, the touch panel 18071 may transmit the touch information to the processor 1810, so as to determine a type of a touch event. Then, the processor 1810 may control the display panel 18061 to provide a corresponding visual output in accordance with the type of the touch event. Although the touch panel 18071 and the display panel 18061 are configured as two separate members in Fig. 18, in some embodiments of the present disclosure, they may be integrated so as to achieve the input and output functions of the terminal, which will not be particularly defined herein.

The interface unit 1808 is configured to provide an interface between an external device and the terminal 1800. For example, the external device may include a wired or wireless headset port, an external power source port (or a charging port), a wired or wireless data port, a memory card port, a port for a device having an identification module, an audio input/output (I/O) port, a video I/O port, and an earphone port. The interface unit 1808 is configured to receive an input from the external device (e.g., data information and electricity) and transmit the input to one or more elements of the terminal 1800, or transmit data between the terminal 1800 and the external device.

The memory 1809 is configured to store therein a software application and various data. It may mainly include an application storage area and a data storage area. An operating system and at least one application for the functions (e.g., an audio/image playing function) may be stored in the application storage area. Data created in accordance with the operation of the mobile phone (e.g., audio data and textbook) may be stored in the data storage area. In addition, the memory 1809 may include a high-speed random access memory, or a non-volatile memory (e.g., at least one magnetic disk or flash memory), or any other volatile solid state memory.

As a control center of the terminal, the processor 1810 may be connected to the other members of the terminal via various interfaces and circuits, and configured to run or execute the software program and/or module stored in the memory 1809, and call the data stored in the memory 1809, so as to execute the functions of the terminal and process the data, thereby to monitor the entire terminal. The processor 1810 may include one or more processing units. Optionally, an application processor and a modem may be integrated into the processor 1810. The application processor is mainly configured to process the operating system, a user interface and the application. The modem is mainly configured to process wireless communication. It should be appreciated that, the modem may also not be integrated into the processor 1810.

The power source 1811 (e.g., a battery) is configured to supply power to the members of the terminal 1800. Optionally, the power source 1811 is logically connected to the processor 1810 via a power source management system, so as to achieve such functions as charging, discharging and power consumption management through the power source management system.

In addition, the terminal 1800 may further include some functional modules not shown in FIG. 18, which will not be particularly defined herein.

The present disclosure further provides in some embodiments a network-side network element, which includes a processor, a memory, and a computer program stored in the memory and executed by the processor. The computer program is executed by the processor so as to implement the steps of the above-mentioned capability control method for the network-side network element with a same technical effect, which will not be particularly defined herein.

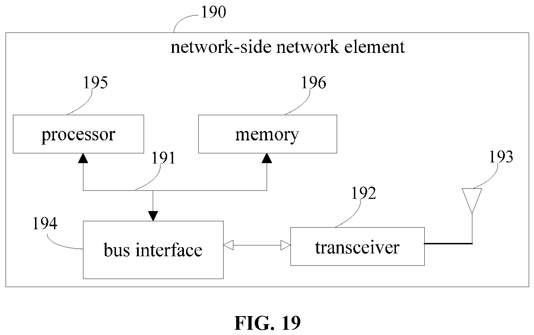

To be specific, FIG. 19 shows a hardware structure of a network-side network element according to one embodiment of the present disclosure. The network-side network element 190 may include, but not limited to, a bus 191, a transceiver 192, an antenna 193, a bus interface 194, a processor 195 and a memory 196.

In the embodiments of the present disclosure, the network-side network element 190 may further include a computer program stored in the memory 196 and executed by the processor 195. The computer program is executed by the processor 195 so as to: acquire first information, the first information including at least one of terminal capability change information, terminal position change information, terminal capability information, indication information about terminal capability identifier information, and operation information about the terminal capability identifier information; and perform a second related operation of a terminal capability in accordance with the first information.

Alternatively, the computer program is executed by the processor 195 so as to: acquire second information, the second information including at least one of indication information indicating that the terminal does not support capability signaling optimization, de-registration request information and registration request information; and perform a third related operation of a terminal capability in accordance with the second information.

The transceiver 192 is configured to receive and transmit data under the control of the processor 195.

In FIG. 19, bus architecture (represented by the bus 191) may include a number of buses and bridges connected to each other, so as to connect various circuits for one or more processors 195 and one or more memories 196. In addition, as is known in the art, the bus 191 may be used to connect any other circuits, such as a circuit for a peripheral device, a circuit for a voltage stabilizer and a power management circuit. The bus interface 194 may be provided between the bus 191 and the transceiver 192, and the transceiver 192 may consist of one element, or more than one element, e.g., transmitters and receivers for communication with any other devices over a transmission medium. Data processed by the processor 195 may be transmitted on a wireless medium via the antenna 193. Further, the antenna 193 may receive data and transmit the data to the processor 195.

The processor 195 may take charge of managing the bus 191 as well as general processings, and may further provide various functions such as timing, peripheral interfacing, voltage adjustment, power source management and any other control functions. The memory 196 may store therein data for the operation of the processor 195.

Optionally, the processor 195 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD).

The present disclosure further provides in some embodiments a computer-readable storage medium storing therein a computer program. The computer program is executed by a processor, so as to implement the steps of the above-mentioned capability control method with a same technical effect, which will not be particularly defined herein. The computer-readable storage medium may be, e.g., a read-only memory (Read-Only Memory, ROM), a random access memory (Random Access Memory, RAM), a magnetic disk or an optical disk.

It should be appreciated that, such words as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the present disclosure may be implemented by software as well as a necessary common hardware platform, or by hardware, and the former may be better in most cases. Based on this, the technical solutions of the present disclosure, partial or full, or parts of the technical solutions of the present disclosure contributing to the related art, may appear in the form of software products, which may be stored in a storage medium (e.g., ROM/RAM, magnetic disk or optical disk) and include several instructions so as to enable a terminal device (mobile phone, computer, server, air conditioner or network device) to execute the method in the embodiments of the present disclosure.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A capability control method for a communications device, comprising:
determining whether a predetermined condition has been met, wherein the predetermined condition comprises at least one of a condition where a terminal capability changes, a condition where a terminal position changes, a condition where a card in a terminal is deleted, a condition where a card is newly added in the terminal, and a condition where the terminal does not support capability signaling optimization after the position has changed; and
when the predetermined condition has been met, performing a first related operation of the terminal capability.

2. The method according to claim 1, wherein the performing the first related operation of the terminal capability comprises at least one of performing an operation on terminal capability identifier information and transmitting first information,
wherein the first information comprises at least one of terminal capability change information, terminal position change information, terminal capability information, indication information about the terminal capability identifier information, and operation information about the terminal capability identifier information.

3. The method according to claim 2, wherein the preforming the operation on the terminal capability identifier information comprises at least one of changing the terminal capability identifier information, deleting the terminal capability identifier information, and setting the terminal capability identifier information as invalid.

4. The method according to claim 3, wherein the changing the terminal capability identifier information comprises changing first capability identifier information as second capability identifier information,
wherein the first capability identifier information is capability identifier information mapped to the terminal capability before the change, and the second capability identifier information is capability identifier information mapped to the terminal capability after the change.

5. The method according to claim 2, wherein the indication information about the terminal capability identifier information comprises at least one of indication information indicating whether a terminal capability identifier is invalid, indication information indicating whether the terminal capability identifier is to be deleted, indication information indicating whether the terminal capability identifier is to be suspended, indication information indicating whether the terminal capability identifier is to be recovered, indication information indicating whether the terminal capability identifier is requested to be changed, and indication information indicating whether the terminal capability identifier is requested to be allocated.

6. The method according to claim 2, wherein the operation information about the terminal capability identifier information comprises at least one of disabled capability identifier information, invalid capability identifier information, deleted capability identifier information, suspended capability identifier information, newly-added capability identifier information and recovered capability identifier information.

7. The method according to claim 2, wherein the terminal position change information comprises indication information indicating whether a terminal position changes, an identifier of a first terminal, and an identifier of a second terminal.

8. The method according to claim 2, wherein the terminal capability change information comprises at least one of capability change indication information, capability change type information, capability variable information, first capability identifier information and second capability identifier information.

9. The method according to claim 8, wherein the capability variable information comprises at least one of capability identifier information about a capability variable, capability information about a capability which has changed, capability information about a newly-added capability, capability information about a disabled capability, capability identifier information about a capability before the change, capability identifier information about a capability after the change, capability identifier information about the newly-added capability, and capability identifier information about the disabled capability.

10. A capability control method for a communications device, comprising:
receiving request information for acquiring a capability variable; and
transmitting capability variable information in accordance with the request information for acquiring the capability variable.

11. The method according to claim 10, wherein the request information for acquiring the capability variable comprises at least one of first capability identifier information, second capability identifier information, indication information indicating whether capability information about the capability variable is to be acquired, indication information indicating whether capability identifier information about the capability variable is to be acquired, and type information about the capability variable.

12. The method according to claim 10, wherein the capability variable information comprises at least one of capability identifier information about the capability variable, changed capability information, newly-added capability information, disabled capability information, capability identifier information about a capability before the change, capability identifier information about a capability after the change, capability identifier information about a newly-added capability, and capability identifier information about a disabled capability.

13. A capability control method for a network-side network element, comprising:
acquiring first information, wherein the first information comprises at least one of terminal capability change information, terminal position change information, terminal capability information, indication information about terminal capability identifier information, and operation information about the terminal capability identifier information; and
performing a second related operation of a terminal capability in accordance with the first information.

14. The method according to claim 13, wherein the terminal capability identifier information comprises at least one of terminal type information, capability indication assistance information, capability identifier application scope information and a terminal capability identifier.

15. The method according to claim 13, wherein the indication information about the terminal capability identifier information comprises at least one of indication information indicating whether the terminal capability identifier is invalid, indication information indicating whether the terminal capability identifier is to be deleted, indication information indicating whether the terminal capability identifier is to be suspended, indication information indicating whether the terminal capability identifier is to be recovered, indication information indicating whether the terminal capability identifier is requested to be changed, and indication information indicating whether the terminal capability identifier is requested to be allocated.

16. The method according to claim 13, wherein the operation information about the terminal capability identifier information comprises at least one of disabled capability identifier information, invalid capability identifier information, deleted capability identifier information, suspended capability identifier information, newly-added capability identifier information and recovered capability identifier information.

17. The method according to claim 13, wherein the terminal capability change information comprises at least one of capability change indication information, capability change type information, capability variable information, first capability identifier information and second capability identifier information.

18. The method according to claim 17, wherein the capability variable information comprises at least one of capability identifier information about a capability variable, changed capability information, newly-added capability information, disabled capability information, capability identifier information about a capability before the change, capability identifier information about a capability after the change, capability identifier information about a newly-added capability, and capability identifier information about a disabled capability.

19. The method according to claim 18, wherein the capability information comprises capability type information.

20. The method according to claim 19, wherein the capability type information comprises at least one of network type information about a capability, serving network information about the capability, card slot information about the capability, and card information about the capability.

21. The method according to claim 13, wherein the performing the second related operation of the terminal capability comprises at least one of:
changing the terminal capability identifier information;
deleting or suspending the terminal capability identifier information;
storing newly-added terminal capability identifier information;
recovering the terminal capability identifier information;
allocating capability identifier information for a changed terminal capability;
allocating capability identifier information for a capability variable;
storing the first information;
transmitting the first information to a first target end;
deducing or mapping the terminal capability;
changing the terminal capability;
changing first capability identifier information in a terminal context as second capability identifier information;
transmitting request information for acquiring the terminal capability to a second target end; and
transmitting request information for acquiring the terminal capability to a third target end.

22. The method according to claim 21, wherein the changing the terminal capability identifier information comprises changing the terminal capability identifier information in accordance with at least one of indication information about the terminal capability identifier information and operation information about the terminal capability identifier information; and/or
the deleting or suspending the terminal capability identifier information comprises deleting or suspending the terminal capability identifier information in accordance with at least one of indication information indicating that a terminal capability identifier is invalid, indication information indicating that the terminal capability identifier is to be deleted, invalid capability identifier information, deleted capability identifier information, terminal position change information and terminal capability change information; and/or
the recovering the terminal capability identifier information comprises recovering the terminal capability identifier information in accordance with at least one of indication information indicating that the terminal capability identifier is to be recovered, the terminal position change information and the terminal capability change information; and/or
the deducing or mapping the terminal capability comprises deducing or mapping the terminal capability in accordance with at least one of the second capability identifier information, the indication information about the terminal capability identifier information and the operation information about the terminal capability identifier information; and/or
the changing the terminal capability comprises changing the terminal capability in accordance with at least one of capability variable information and a terminal capability mapped to the second capability identifier information.

23. A capability control method for a network-side network element, comprising:
acquiring second information, wherein the second information comprises at least one of indication information indicating that a terminal does not support capability signaling optimization, de-registration request information and registration request information; and
performing a third related operation of a terminal capability in accordance with the second information.

24. The method according to claim 23, wherein the acquiring the second information comprises acquiring the indication information indicating the terminal does not support the capability signaling optimization in accordance with at least one of a condition where a terminal position changes and a condition where indication information about the capability signaling optimization fails to be received.

25. The method according to claim 23, wherein the performing the third related operation of the terminal capability comprises at least one of:
changing a capability signaling optimization capability of the terminal;
deleting or suspending terminal capability identifier information;
transmitting the second information to a fourth target end; and
transmitting request information for acquiring a terminal capability to a fifth target end.

26. A communications device, comprising:
a determination module configured to determine whether a predetermined condition has been met, wherein the predetermined condition comprises at least one of a condition where a terminal capability changes, a condition where a terminal position changes, a condition where a card in the terminal is deleted, a condition where a card is newly added in the terminal, and a condition where the terminal does not support capability signaling optimization after the position has changed; and
a first execution module configured to, when the predetermined condition has been met, perform a first related operation of the terminal capability.

27. A communications device, comprising:
a reception module configured to receive request information for acquiring a capability variable; and
a transmission module configured to transmit capability variable information in accordance with the request information for acquiring the capability variable.

28. A network-side network element, comprising:
a first acquisition module configured to acquire first information, wherein the first information comprises at least one of terminal capability change information, terminal position change information, terminal capability information, indication information about terminal capability identifier information, and operation information about the terminal capability identifier information; and
a second execution module configured to perform a second related operation of a terminal capability in accordance with the first information.

29. A network-side network element, comprising:
a second acquisition module configured to acquire second information, wherein the second information comprises at least one of indication information indicating that the terminal does not support capability signaling optimization, de-registration request information and registration request information; and
a third execution module configured to perform a third related operation of a terminal capability in accordance with the second information.

30. A communications device, comprising a memory, a processor, and a computer program stored in the memory and executed by the processor, wherein the computer program is executed by the processor so as to implement the steps of the capability control method according to any one of claims 1 to 12, or implement the steps of the capability control method according to any one of claims 13 to 25.

31. A computer-readable storage medium storing therein a computer program, wherein the computer program is executed by a processor so as to implement the steps of the capability control method according to any one of claims 1 to 12, or implement the steps of the capability control method according to any one of claims 13 to 25.
